(19) Europäisches Patentamt
European Patent Office
Office européen des brevets

(11) **EP 4 488 330 A1**

(12) **EUROPEAN PATENT APPLICATION**
published in accordance with Art. 153(4) EPC

(43) Date of publication:
**08.01.2025 Bulletin 2025/02**

(21) Application number: **23759549.1**

(22) Date of filing: **24.01.2023**

(51) International Patent Classification (IPC):
***C08L 33/12** (2006.01)* ***C08L 25/08** (2006.01)*

(52) Cooperative Patent Classification (CPC):
**C08L 25/08; C08L 33/12**

(86) International application number:
**PCT/JP2023/002018**

(87) International publication number:
**WO 2023/162543 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029551**

(71) Applicant: **Sumitomo Chemical Company, Limited**
**Tokyo 103-6020 (JP)**

(72) Inventor: **OKAZAKI, Ryosuke**
**Niihama-shi, Ehime 792-8521 (JP)**

(74) Representative: **Winter, Brandl - Partnerschaft mbB**
**Alois-Steinecker-Straße 22**
**85354 Freising (DE)**

# (54) METHACRYLIC RESIN COMPOSITION AND MOLDED BODY OF SAME

(57) Provided is a methacrylic resin composition capable of suppressing occurrence of white turbidity in a molded body and producing a molded body having an excellent appearance.

A methacrylic resin composition contains a methacrylic resin satisfying at least one requirement selected from the group consisting of the following requirements (1) and (2); and a styrene-maleic anhydride copolymer having a structural unit derived from styrene and a structural unit derived from maleic anhydride,

Requirement (1): a ratio (Mw/Mn) of a mass average molecular weight of the methacrylic resin to a number average molecular weight of the methacrylic resin is 1.9 to 4.8, and

Requirement (2): a ratio of a peak area from a molecular weight of 300,000 to the end point to a peak area from the starting point to the end point in a differential molecular weight distribution curve of the methacrylic resin is 1% to 15%.

FIG. 4

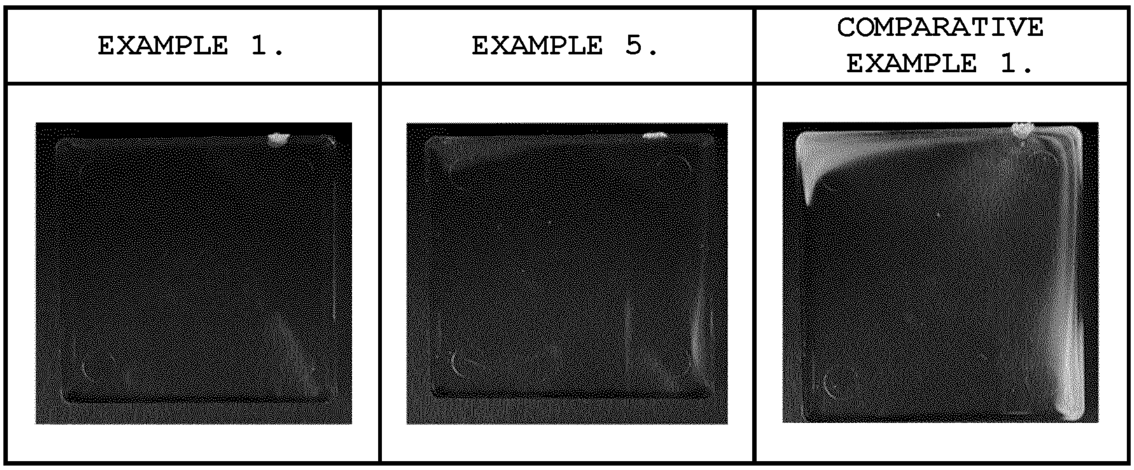


EP 4 488 330 A1

## Description

TECHNICAL FIELD

The present invention relates to a methacrylic resin composition and a molded body of the same.

BACKGROUND ART

The methacrylic resin composition has excellent transparency and heat resistance. Therefore, since the methacrylic resin composition can be used, for example, as a material for a member for a display device or a member for an automobile (in particular, a cover for a tail lamp or a head lamp) instead of inorganic glass, the methacrylic resin composition having various properties has been developed.

For example, the following Patent Document 1 describes a "polymethacrylate composition containing an aromatic compound containing 50 to 85 parts by weight of a methacrylate polymer, 15 to 50 parts by weight of a styrene-maleic anhydride copolymer, and a phosphite group, in which the methacrylate polymer has a methacrylate monomer unit and an acrylate monomer unit and has a weight average molecular weight ranging from 20,000 to 200,000, the styrene-maleic anhydride copolymer has 65 wt% to 85 wt% of a styrene monomer unit, 15 wt% to 35 wt% of a maleic anhydride monomer unit, and 0 to 20 wt% of a second copolymerizable monomer unit, and the polymethacrylate composition contains 200 ppm to 900 ppm of an aromatic compound having a phosphite group" for "providing an optical device capable of having both heat resistance and optical properties, and a display device including the optical device".

PRIOR ART DOCUMENT

PATENT DOCUMENT

Patent Document 1: JP-A-2020-090667

SUMMARY OF THE INVENTION

PROBLEMS TO BE SOLVED BY THE INVENTION

The member as described above, which is a molded body obtained by molding the methacrylic resin composition, is generally produced by a molding method using a mold such as an injection molding method.

However, according to the conventional methacrylic resin composition as described in the above Patent Document 1, when the methacrylic resin composition is formed into a molded body, white turbidity occurs in a partial region of the molded body, and transparency may be impaired or an appearance may be impaired.

Therefore, there is a demand for a methacrylic resin composition capable of suppressing occurrence of white turbidity particularly in a molded body and producing a molded body having an excellent appearance.

MEANS FOR SOLVING THE PROBLEMS

As a result of conducting intensive studies to solve the above problems, the present inventors found that the above problems can be solved by a methacrylic resin composition containing a methacrylic resin and a styrene-maleic anhydride copolymer that satisfies predetermined requirements, thereby completing the present invention.

Therefore, the present invention provides the following [1] to [14].

[1] A methacrylic resin composition containing:

a methacrylic resin satisfying at least one requirement selected from the group consisting of the following requirements (1) and (2); and
a styrene-maleic anhydride copolymer having a structural unit derived from styrene and a structural unit derived from maleic anhydride,
Requirement (1): a ratio (Mw/Mn) of a mass average molecular weight of the methacrylic resin to a number average molecular weight of the methacrylic resin is 1.9 to 4.8, and
Requirement (2): a ratio of a peak area from a molecular weight of 300,000 to the end point to a peak area from the starting point to the end point in a differential molecular weight distribution curve of the methacrylic resin is 1% to 15%.

[2] The methacrylic resin composition according to [1], in which the methacrylic resin composition satisfies the following requirement (1'),

Requirement (1'): a ratio (Mw/Mn) of a mass average molecular weight of the methacrylic resin to a number average molecular weight of the methacrylic resin is 1.9 to 3.0.

[3] The methacrylic resin composition according to [2], in which the methacrylic resin composition satisfies the following requirement (1"),

Requirement (1"): a ratio (Mw/Mn) of a mass average molecular weight of the methacrylic resin to a number average molecular weight of the methacrylic resin is 2.1 to 2.9.

[4] The methacrylic resin composition according to any one of [1] to [3], in which the methacrylic resin composition satisfies the following requirement (2'),

Requirement (2'): a ratio of a peak area from a molecular weight of 300,000 to the end point to a peak area from the starting point to the end point in a differential molecular weight distribution curve of the methacrylic resin is 5% to 13%.

[5] The methacrylic resin composition according to any one of [1] to [4], in which the methacrylic resin composition satisfies the following requirement (3),

Requirement (3): a mass average molecular weight of the methacrylic resin is 80,000 or more.

[6] The methacrylic resin composition according to [5], in which the methacrylic resin composition satisfies the following requirement (3'),

Requirement (3'): a mass average molecular weight of the methacrylic resin is 80,000 to 180,000.

[7] The methacrylic resin composition according to any one of [1] to [6], in which the methacrylic resin has a structural unit derived from a methacrylic acid ester, and a content of the structural unit derived from the methacrylic acid ester included in the methacrylic resin is 95.0% by mass or more with respect to 100% by mass of a total content of all structural units included in the methacrylic resin.

[8] The methacrylic resin composition according to [7], in which the methacrylic acid ester is methyl methacrylate.

[9] The methacrylic resin composition according to any one of [1] to [8], in which the methacrylic resin has a structural unit derived from an acrylic acid ester.

[10] The methacrylic resin composition according to [9], in which the acrylic acid ester is methyl acrylate.

[11] The methacrylic resin composition according to any one of [1] to [10], in which a content of a structural unit derived from maleic anhydride contained in the styrene-maleic anhydride copolymer is 15% by mass to 35% by mass with respect to 100% by mass of a total content of all structural units contained in the styrene-maleic anhydride copolymer.

[12] The methacrylic resin composition according to any one of [1] to [11], in which a content of the methacrylic resin and a content of the styrene-maleic anhydride copolymer are 50% by mass to 90% by mass and 10% by mass to 50% by mass, respectively,

with respect to 100% by mass of a total content of the methacrylic resin and the styrene-maleic anhydride copolymer.

[13] A molded body containing the methacrylic resin composition according to any one of [1] to [12].

[14] A molded body containing at least one resin, in which the molded body satisfies the following requirements (21) to (23):

Requirement (21): a water absorption rate measured in the following procedures 1) to 3) is 1.5% by mass to 2.5% by mass,

Procedure 1): the molded body is pre-dried,

Procedure 2): the obtained molded body is allowed to stand in warm water at 80°C for 100 hours, and

Procedure 3): the water absorption rate is calculated from the following equation:

Water absorption rate = ((mass of molded body after standing for 100 hours) - (mass of molded body before standing for 100 hours))/(mass of molded body before standing for 100 hours) $\times$ 100,

Requirement (22): a Charpy impact strength is 14 kJ/$m^2$ to 22 kJ/$m^2$, and

Requirement (23): a Vicat softening temperature is 113°C to 130°C.

EFFECT OF THE INVENTION

According to the present invention, it is possible to provide a methacrylic resin composition capable of suppressing occurrence of white turbidity in a molded body and producing a molded body having an excellent appearance.

BRIEF DESCRIPTION OF THE DRAWINGS

Fig. 1 is a schematic view for explaining a configuration example of a continuous polymerization apparatus of the present embodiment.
Fig. 2 is a schematic view for explaining a configuration example of a mold.
Fig. 3 is a schematic view for explaining a configuration example of a molded body.
Fig. 4 is a photograph showing an appearance of a molded body.

## MODE FOR CARRYING OUT THE INVENTION

In the present specification, unless otherwise specified, a numerical range of "A to B" means "A or more and B or less".
In the present specification, a structural unit derived from a predetermined monomer may be simply referred to as a "monomer unit" using the name of the monomer.

### 1. Methacrylic Resin Composition

A methacrylic resin composition of the present embodiment is a methacrylic resin composition containing a methacrylic resin satisfying at least one requirement selected from the group consisting of the following requirements (1) and (2); and a styrene-maleic anhydride copolymer having a structural unit derived from styrene and a structural unit derived from maleic anhydride.
Requirement (1): a ratio (Mw/Mn) of a mass average molecular weight of the methacrylic resin (Mw) to a number average molecular weight of the methacrylic resin (Mn) is 1.9 to 4.8.
Requirement (2): a ratio of a peak area from a molecular weight of 300,000 to the end point to a peak area from the starting point to the end point in a differential molecular weight distribution curve of the methacrylic resin is 1% to 15%.
According to the methacrylic resin composition of the present embodiment, with the above configuration, it is possible to suppress occurrence of white turbidity in a molded body and to produce a molded body having an excellent appearance.

#### (Methacrylic Resin)

The methacrylic resin composition of the present embodiment may contain only one methacrylic resin or two or more methacrylic resins.
It is preferable that the methacrylic resin composition of the present embodiment contains two or more methacrylic resins. More specifically, the methacrylic resin composition of the present embodiment can contain a methacrylic resin (A) and a methacrylic resin (B) as the methacrylic resin. Hereinafter, these methacrylic resins will be described in detail. Note that, in the present specification, unless otherwise specified, the matter related to the "methacrylic resin" applies to both the methacrylic resin (A) and the methacrylic resin (B) contained in the methacrylic resin composition.
A content of one of the methacrylic resin (A) and the methacrylic resin (B) and a content of the other one of the methacrylic resin (A) and the methacrylic resin (B) contained in the methacrylic resin composition are preferably 25% by mass to 35% by mass and 65% by mass to 75% by mass, respectively, with respect to 100% by mass of a total content of the methacrylic resin (A) and the methacrylic resin (B).
When the contents of the methacrylic resin (A) and the methacrylic resin (B) are in the above ranges, a molded body having an excellent Charpy impact strength can be obtained.
It is preferable that mass average molecular weights (Mw) of the methacrylic resin (A) and the methacrylic resin (B) are different from each other, from the viewpoint of improving solvent resistance, a Charpy impact strength, and fluidity. It is more preferable that the mass average molecular weight of the methacrylic resin (A) is 120,000 or more and 180,000 or less and the mass average molecular weight of the methacrylic resin (B) is 10,000 or more and 60,000 or less.
The mass average molecular weight of the methacrylic resin (A) is preferably 120,000 or more and 180,000 or less, and more preferably 130,000 or more and 160,000 or less. The mass average molecular weight of the methacrylic resin (B) is preferably 10,000 or more and 60,000 or less, and more preferably 30,000 or more and 50,000 or less.
In the present embodiment, the methacrylic resin composition may contain two or more methacrylic resins (A), and may contain two or more methacrylic resins (B).
When the mass average molecular weights of the methacrylic resin (A) and the methacrylic resin (B) are within the above ranges, a molded body having a more excellent Charpy impact strength can be obtained from the methacrylic resin composition.
In the present embodiment, the mass average molecular weight (Mw) and further the number average molecular weight (Mn) can be determined using size-exclusion chromatography (SEC) known in the related art, such as gel permeation chromatography (GPC), according to JIS K 7252-1 to 4 (Plastic-Determination Method of Average Molecular Weight and Molecular Weight Distribution of Polymer by Size-Exclusion Chromatography-Part 1 to Part 4).

Requirement (1)

As defined in the above requirement (1), in the methacrylic resin composition of the present embodiment, the ratio (Mw/Mn) of the mass average molecular weight (Mw) to the number average molecular weight (Mn) of the methacrylic resin is 1.9 to 4.8, and preferably 2.0 to 4.5, from the viewpoint of improving the Charpy impact strength, the haze value (visible light transmittance), and the appearance of the molded body.
In the methacrylic resin composition of the present embodiment, the ratio (Mw/Mn) of the mass average molecular weight to the number average molecular weight of the methacrylic resin is more preferably 1.9 to 3.0 (requirement (1')), still more preferably 2.0 to 2.9 (requirement (1'')), and still more preferably 2.1 to 2.7, from the viewpoint of improving the Charpy impact strength, the haze value (visible light transmittance), and the appearance of the molded body.

Requirement (2)

As defined in the above requirement (2), in the methacrylic resin composition of the present embodiment, in the differential molecular weight distribution curve of the methacrylic resin, a ratio of a peak area from a molecular weight of 300,000 to the end point to a peak area from the starting point to the end point is 1% to 15%, and preferably 4% to 10%, from the viewpoint of improving the Charpy impact strength, the haze value (visible light transmittance), and the appearance of the molded body.
In the methacrylic resin composition of the present embodiment, in the differential molecular weight distribution curve of the methacrylic resin, a ratio of a peak area from a molecular weight of 300,000 to the end point to a peak area from the starting point to the end point is more preferably 3% to 13% (requirement (2')), and still more preferably 5% to 12.1% or 5.1% to 10%, from the viewpoint of improving the Charpy impact strength, the haze value (visible light transmittance), and the appearance of the molded body.
The "ratio of the peak area from the molecular weight of 300,000 to the end point to the peak area from the starting point to the end point in the differential molecular weight distribution curve of the methacrylic resin" can be determined using size-exclusion chromatography (SEC) known in the related art, such as gel permeation chromatography (GPC), according to JIS K 7252-1 to 4 (Plastic-Determination Method of Average Molecular Weight and Molecular Weight Distribution of Polymer by Size-Exclusion Chromatography-Part 1 to Part 4).
Specifically, first, a calibration curve showing a correlation between an elution time (t) and a logarithm (logM) of a molecular weight (M) is created in advance using a commercially available standard substance of a methacrylic resin having a monodisperse molecular weight (a standard substance whose molecular weights such as a number average molecular weight and a mass average molecular weight are known and whose molecular weight distribution is narrow).
Next, a sample containing a methacrylic resin composition (methacrylic resin) to be measured is dissolved in an appropriate solvent to prepare a dilute solution. The solution is injected into a mobile phase (an eluent) and introduced into a SEC column. Note that the SEC column is filled with non-absorbent fine particles having fine pores with a uniform size or various sizes.
The samples can be separated from each other by a difference in molecular weight (hydrodynamic volume) as the samples pass through the SEC column. In the SEC column, since a methacrylic resin having a higher molecular weight cannot permeate into the fine pores, its elution is fast.
On the other hand, since a methacrylic resin having a lower molecular weight can permeate into the fine pores, its elution is slow. Then, a concentration of the methacrylic resin in the eluent is continuously detected with a concentration detector to obtain a SEC chromatogram.
Here, the molecular weight (M) of the methacrylic resin corresponding to an arbitrary elution time (t) in the SEC chromatogram is determined using the calibration curve created in advance using a standard substance having a monodisperse molecular weight.
Next, a "differential molecular weight distribution curve" is created by plotting dW/d (logM) against the molecular weight (M) of the methacrylic resin on the basis of the data obtained in the above. Here, "W" refers to a concentration fraction.
Specifically, the differential molecular weight distribution curve can be created by plotting $dW_i/d(logM_i)$ against a molecular weight ($M_i$) of the methacrylic resin, $dW_i/d(logM_i)$ being calculated according to the following equations using the molecular weight ($M_i$) of the methacrylic resin and a signal intensity ($H_i$) of the methacrylic resin at each elution time ($t_i$).

[Math. 1]

$$\Delta W_i = \frac{H_i}{\sum_{i=1}^{n} H_i}$$

$$w_i = \Delta W_i \times \frac{1}{I}$$

$$\frac{dW_i}{d(\log M_i)} = -w_i \times \frac{dt_i}{d(\log M_i)}$$

In the equation, I represents a data collection interval (min).

In the present embodiment, the "ratio of the peak area from the molecular weight of 300,000 to the end point to the peak area from the starting point to the end point in the differential molecular weight distribution curve of the methacrylic resin" means a ratio (%) of an area from a molecular weight of 300,000 to the end point to a peak area from the starting point to the end point when, among points where the differential molecular weight distribution curve and a straight line represented by dW/d(logM) = 0 intersect, a point on a low molecular weight side is the starting point and a point of a high molecular weight side is the end point, in a case where an area (peak area) surrounded by the differential molecular weight distribution curve from the starting point to the end point and the straight line is 100.

Requirement (3)

In the methacrylic resin composition of the present embodiment, the mass average molecular weight of the methacrylic resin (may include the methacrylic resin (A) and the methacrylic resin (B)) is preferably 80,000 or more (requirement (3)) from the viewpoint of improving the Charpy impact strength, the haze value (visible light transmittance), and the appearance of the molded body.

In the methacrylic resin composition of the present embodiment, the mass average molecular weight of the methacrylic resin is 80,000 to 180,000 (requirement (3')), and more preferably 107,000 to 157,000, from the viewpoint of improving the Charpy impact strength, the haze value (visible light transmittance), and the appearance of the molded body.

In the methacrylic resin composition of the present embodiment, the methacrylic resin has a structural unit derived from a methacrylic acid ester (may be referred to as a methacrylic acid ester unit).

In the present embodiment, examples of the methacrylic acid ester that can constitute the methacrylic acid ester unit include alkyl methacrylates such as methyl methacrylate, ethyl methacrylate, 2-ethylhexyl methacrylate, lauryl methacrylate, benzyl methacrylate, and cyclohexyl methacrylate. The methacrylic acid ester is preferably methyl methacrylate. These methacrylic acid esters may be used alone or in combination of two or more thereof.

A content of the methacrylic acid ester unit included in the methacrylic resin is usually 90.0% by mass or more, preferably 95.0% by mass or more, more preferably 98.0% by mass or more, and still more preferably 98.4% by mass or more, but is usually 100.0% by mass or less, preferably 93.9% by mass to 98.4% by mass, and more preferably 96.7% by mass to 98.4% by mass, with respect to 100% by mass of all structural units included in the methacrylic resin. Note that such a content of the methacrylic acid ester unit can be determined by analysis using, for example, pyrolysis gas chromatography.

In the present embodiment, the methacrylic resin (the methacrylic resin (A) and the methacrylic resin (B)) may further have a monomer unit other than the methacrylic acid ester unit, and may have, for example, a structural unit derived from an acrylic acid ester (may be referred to as an acrylic acid ester unit).

In the present embodiment, examples of the acrylic acid ester that can constitute the acrylic acid ester unit include methyl acrylate, ethyl acrylate, propyl acrylate, n-butyl acrylate, sec-butyl acrylate, tert-butyl acrylate, cyclohexyl acrylate, benzyl acrylate, 2-ethylhexyl acrylate, 2-hydroxyethyl acrylate, and cyclopentadiene acrylate. As the acrylic acid ester, methyl acrylate or ethyl acrylate is preferred, and methyl acrylate is more preferred. These acrylic acid esters may be used alone or in combination of two or more thereof.

A content of the acrylic acid ester unit included in the methacrylic resin is usually 0.1% by mass to 10% by mass, preferably 0.1% by mass to 6.1% by mass, more preferably 0.1% by mass to 5.5% by mass, still more preferably 1.0% by

mass to 3.3% by mass, and particularly preferably 1.5% by mass to 2.5% by mass, with respect to 100% by mass of a total of the methacrylic acid ester unit and the acrylic acid ester unit in the methacrylic resin composition. Such a content can be determined by, for example, any conventionally known suitable analysis method using pyrolysis gas chromatography or the like.

Examples of the analysis method include a method of pyrolyzing the methacrylic resin composition (methacrylic resin) of the present embodiment in a pyrolysis furnace at a predetermined temperature (400°C or higher), and analyzing the generated decomposed gas using gas chromatography, and the content can be determined by determining an area ratio of a peak corresponding to each monomer component used and converting the obtained area ratio into a mass ratio (%).

As for a method of converting the above area ratio into the mass ratio (%), for example, for a standard product of a methacrylic resin (that is available as a commercial product and is a methacrylic resin whose types and mass ratios of the monomer components are known), an area ratio of a peak corresponding to each monomer component is determined in advance, a factor with which the area ratio can be converted into the mass ratio (%) of the monomer component is calculated, or a factor is calculated by creating a calibration curve using a plurality of standard products, if necessary, and the area ratio of the monomer component of the methacrylic resin contained in the methacrylic resin composition of the present invention can be converted into the corresponding mass ratio (%) using the factor. In a case where these peaks partially overlap with each other, the above ratio can also be calculated by correcting the overlapping area using a method known in the related art.

When the content of the acrylic acid ester unit in the methacrylic resin is within the above range, the thermal stability and heat resistance (Vicat softening temperature) during injection molding can be further improved.

(Other Structural Units)

In the methacrylic resin composition of the present embodiment, examples of the other structural units that the methacrylic resin can further contain in addition to the acrylic acid ester unit described above include structural units derived from other monomers (sometimes referred to as other monomer units) that can be copolymerized with the methacrylic acid ester and/or acrylic acid ester.

Examples of the monomer components that can constitute the other monomer units include a monofunctional monomer component having one radically-polymerizable double bond and a polyfunctional monomer component having two or more radically-polymerizable double bonds. In the present embodiment, two or more of these monomer components may be used.

Examples of the above monofunctional monomer component include an unsaturated carboxylic acid such as acrylic acid, methacrylic acid, maleic acid, itaconic acid, maleic anhydride, or itaconic anhydride, or an acid anhydride thereof; a nitrogen-containing monomer component such as acrylamide, methacrylamide, acrylonitrile, or methacrylonitrile; and a styrene-based monomer component such as styrene or $\alpha$-methylstyrene.

Examples of the polyfunctional monomer component include an unsaturated carboxylic acid diester of a glycol, such as ethylene glycol dimethacrylate or butanediol dimethacrylate; an alkenyl ester of an unsaturated carboxylic acid, such as allyl acrylate, allyl methacrylate, or allyl cinnamate; an alkenyl ester of a polybasic acid, such as diallyl phthalate, diallyl maleate, triallyl cyanurate, or triallyl isocyanurate; an unsaturated carboxylic acid ester of a polyhydric alcohol such as trimethylolpropane triacrylate; and divinylbenzene.

(Method for Producing (Preparing) Methacrylic Resin)

In the present embodiment, the methacrylic resin can be produced by any suitable production method known in the related art. The methacrylic resin can be produced by polymerizing a monomer component such as the methacrylic acid ester described above and a monomer component that can constitute the other monomer units.

Examples of the method for producing a methacrylic resin by polymerizing the monomer component described above include a suspension polymerization method, a solution polymerization method, and a bulk polymerization method. As the method for producing a methacrylic resin, a bulk polymerization method is preferably used.

In the case of the bulk polymerization method, since a polymerization stabilizer is not used, a methacrylic resin having an excellent appearance, and further a methacrylic resin composition and a molded body of the same can be obtained. In addition, unlike in the suspension polymerization method, a polymerization temperature is higher than 100°C, and as a result, syndiotacticity of the methacrylic resin is likely to be decreased, such that fluidity of the methacrylic resin is further increased. Furthermore, in a case where the bulk polymerization is continuously performed, for example, a partial polymer can be continuously extracted, the partial polymer being obtained by continuously feeding the monomer component, and if necessary, a polymerization initiator, a chain transfer agent, and the like, to a reaction vessel, and allowing them to retain in the reaction vessel for a predetermined time. As a result, a methacrylic resin can be obtained with high productivity.

In the production of the methacrylic resin of the present invention, the polymerization temperature is preferably 110 to 190°C.

In the method for producing a methacrylic resin of the present embodiment, particularly in the bulk polymerization method, an additive such as a polymerization initiator or a chain transfer agent may also be used.

As the polymerization initiator, for example, a radical initiator can be used. Examples of the radical initiator include an azo compound such as azobisisobutyronitrile, azobisdimethylvaleronitrile, azobiscyclohexanenitrile, 1,1'-azobis(1-acetoxy-1-phenylethane), dimethyl 2,2'-azobisisobutyrate, or 4,4'-azobis-4-cyanovaleric acid; and an organic peroxide such as benzoyl peroxide, lauroyl peroxide, acetyl peroxide, caprylyl peroxide, 2,4-dichlorobenzoyl peroxide, isobutyl peroxide, acetylcyclohexylsulfonyl peroxide, tert-butyl peroxypivalate, tert-butyl peroxyneodecanoate, tert-butyl peroxyneoheptanoate, tert-butyl peroxy-2-ethylhexanoate, 1,1-di(tert-butylperoxy)cyclohexane, 1,1-di(tert-butylperoxy)-3,3,5-trimethylcyclohexane, 1,1-di(tert-hexylperoxy)-3,3,5-trimethylcyclohexane, diisopropyl peroxydicarbonate, diisobutyl peroxydicarbonate, di-sec-butyl peroxydicarbonate, di-n-butyl peroxydicarbonate, bis(2-ethylhexyl)peroxydicarbonate, bis(4-tert-butylcyclohexyl)peroxydicarbonate, tert-amyl peroxy-2-ethylhexanoate, 1,1,3,3-tetramethylbutyl peroxy-ethylhexanoate, 1,1,2-trimethylpropyl peroxy-2-ethylhexanoate, tert-butyl peroxyisopropylmonocarbonate, tert-amyl peroxyisopropylmonocarbonate, tert-butyl peroxy-2-ethylhexylcarbonate, tert-butyl peroxyallylcarbonate, tert-butyl peroxyisopropylcarbonate, 1,1,3,3-tetramethylbutyl peroxyisopropylmonocarbonate, 1,1,2-trimethylpropyl peroxyisopropylmonocarbonate, 1,1,3,3-tetramethylbutyl peroxyisononanate, 1,1,2-trimethylpropyl peroxy-isononanate, or tert-butyl peroxybenzoate. The polymerization initiators may be used alone or in combination of two or more thereof.

The polymerization initiator may be selected according to the methacrylic resin to be produced and the monomer component to be used. The radical initiator is preferably a radical polymerization agent having a half-life period within 1 minute at the polymerization temperature.

The chain transfer agent that can be used in the present embodiment may be either a monofunctional chain transfer agent or a polyfunctional chain transfer agent. Specific examples of the chain transfer agent include alkyl mercaptans such as n-propyl mercaptan, isopropyl mercaptan, n-butyl mercaptan, tert-butyl mercaptan, n-hexyl mercaptan, n-octyl mercaptan, 2-ethylhexyl mercaptan, n-dodecyl mercaptan, and tert-dodecyl mercaptan, aromatic mercaptans such as phenyl mercaptan and thiocresol, mercaptans having 18 or fewer carbon atoms, such as ethylene thioglycol, polyhydric alcohols such as ethylene glycol, neopentyl glycol, trimethylolpropane, pentaerythritol, dipentaerythritol, tripentaerythritol, and sorbitol, a compound in which these hydroxyl groups are esterified with thioglycolic acid or 3-mercaptopropionic acid, 1,4-dihydronaphthalene, 1,4,5,8-tetrahydronaphthalene, β-terpinene, terpinolene, 1,4-cyclohexadiene, and hydrogen sulfide. These chain transfer agents may be used alone or in combination of two or more thereof.

The type and use amount of the chain transfer agent can be selected depending on the type of a methacrylic resin to be produced or a monomer component (raw material monomer) to be used. As the chain transfer agent, n-octyl mercaptan or n-dodecyl mercaptan is preferably used.

In the present embodiment, the method for producing a methacrylic resin is not particularly limited. In the present embodiment, as the method for producing a methacrylic resin, any suitable production method known in the related art can be applied. Examples of the method for producing a methacrylic resin include a production method using a multi-stage polymerization method using two or more reaction tanks. When the methacrylic resin composition can contain, for example, two or more methacrylic resins having different molecular weights, compositions, and the like, it is preferable to use a multi-stage polymerization method as the method for producing a methacrylic resin.

Specific examples of the multi-stage polymerization method include a method in which, when two methacrylic resins are contained in the methacrylic resin composition, a raw material monomer (monomer component) capable of producing the other methacrylic resin is further polymerized in the presence of a composition (syrup) containing one methacrylic resin of the two methacrylic resins, and then a composition (syrup) containing the two methacrylic resins is obtained.

In the present embodiment, as the multi-stage polymerization method, for example, the method described in WO 2014/088082 A is preferably adopted.

Here, a configuration example of a continuous polymerization apparatus of the present embodiment that can be applied to the multi-stage polymerization method will be described with reference to Fig. 1. Fig. 1 is a schematic view for explaining the configuration example of the continuous polymerization apparatus of the present embodiment.

The continuous polymerization apparatus of the present embodiment includes a raw material monomer tank 1, a polymerization initiator tank 3, a pump 5 connected to the raw material monomer tank 1, a pump 7 connected to the polymerization initiator tank 3, a raw material feeding line 9 connecting the pumps 5 and 7 and a feeding port 11a provided in a first reaction tank 10, a feeding port 11c provided in the first reaction tank 10 and connectable to the pump 7, a jacket 13 provided to cover the first reaction tank 10, a stirrer 14 stored in the first reaction tank 10, a connection line 15 connecting an extraction port 11b provided in the first reaction tank 10 and a feeding port 21a of a second reaction tank 20 or connecting a pump 19 connected to the polymerization initiator tank 17, and the feeding port 21a and a feeding port 21c, a jacket 23 provided to cover the second reaction tank 20, a stirrer 24 stored in the second reaction tank 20, an extraction line 25 connecting an extraction port 21b provided in the second reaction tank 20 and a pre-heater 31, a discharge line 35

connected to a devolatilization extruder 33 connected to the pre-heater 31, and a recovery tank 37 connected to the devolatilization extruder 33.

For example, as illustrated in Fig. 1, the multi-stage polymerization method in the present embodiment is performed using two connected reaction tanks (the first reaction tank 10 and the second reaction tank 20), and continuous bulk polymerization can be preferably performed in each reaction tank.

According to the multi-stage polymerization method in the present embodiment, for example, one of two methacrylic resins can be prepared in the first reaction tank 10, and then the other of the two methacrylic resins can be prepared in the second reaction tank 20 in the presence of the one methacrylic resin. In the present embodiment, each of the first reaction tank 10 and the second reaction tank 20 is preferably a complete mixing reaction tank.

In the present embodiment, in the preparation of the methacrylic resin using the multi-stage polymerization method, the temperature in the first reaction tank 10 is preferably 110°C to 160°C, more preferably 110°C to 150°C, and still more preferably 120°C to 140°C.

When the temperature in the first reaction tank 10 is within the above range, a concentration of a chain transfer agent in the first reaction tank 10 is preferably 0.12% by mass to 0.19% by mass with respect to a total mass of a raw material monomer fed to the first reaction tank 10.

In the preparation of the methacrylic resin, the temperature in the second reaction tank 20 is preferably 170°C to 190°C, and more preferably 175°C to 185°C.

When the temperature in the second reaction tank 20 is within the above range, a concentration of a chain transfer agent fed to the second reaction tank 20 is preferably 0.10% by mass to 0.25% by mass with respect to a total mass of a raw material monomer fed to the second reaction tank 20.

In the present embodiment, the method for producing a methacrylic resin by the multi-stage polymerization method includes a first polymerization step and a second polymerization step.

Specifically, in the first polymerization step, a raw material composition (A) containing a raw material monomer (A) containing 98.0% by mass or more of a methacrylic acid ester, a polymerization initiator (A), and a chain transfer agent (A) is fed to the first reaction tank 10, the raw material composition (A) is subjected to continuous bulk polymerization in the first reaction tank 10 to obtain an intermediate composition (A), and the obtained intermediate composition (A) is extracted from the first reaction tank 10.

Next, in the second polymerization step, a raw material composition (B) containing a raw material monomer (B) containing 98.0% by mass or more of a methacrylic acid ester, a polymerization initiator (B), and a chain transfer agent (B), and the intermediate composition (A) extracted from the first reaction tank 10 in the first polymerization step are fed to the second reaction tank 20, the raw material composition (B) and the intermediate composition (A) are further subjected to continuous bulk polymerization in the second reaction tank 20 to obtain a methacrylic resin, and the obtained methacrylic resin is extracted from the second reaction tank 20.

Examples and preferred examples of the methacrylic acid ester contained in the raw material monomer (A) or the raw material monomer (B) include examples and preferred examples of the methacrylic acid ester exemplified in the description of the methacrylic resin (A) or the methacrylic resin (B).

As the polymerization initiator (A) and the polymerization initiator (B), the polymerization initiator described above can be used. As the chain transfer agent (A) and the chain transfer agent (B), the chain transfer agent exemplified above can be used.

In the present embodiment, the method for producing a methacrylic resin preferably satisfies the following requirements (11) and (12).

$$\text{Requirement (11)}\quad 1.5 \leq L^A/L^B \leq 1.9$$

$$\text{Requirement (12)}\quad 0.5 \leq S^B/S^A \leq 2.5$$

Here, $L^A$ represents a concentration (% by mass) of the polymerization initiator (A) in the raw material composition (A).

$L^B$ represents a concentration (% by mass) of the polymerization initiator (B) in a mixture of the raw material composition (B) and the intermediate composition (A) .

$S^A$ represents a concentration (% by mass) of the chain transfer agent (A) in the raw material composition (A) .

$S^B$ represents a concentration (% by mass) of the chain transfer agent (B) in the mixture of the raw material composition (B) and the intermediate composition (A).

The method for producing a methacrylic resin of the present embodiment satisfies the requirements (11) and (12), such that the Charpy impact strength, the haze value (visible light transmittance), and the appearance of the molded body can be improved.

A value of $L^A/L^B$ is more preferably 1.6 or higher, and still more preferably 1.7 or higher, but more preferably 1.8 or lower, and still more preferably 1.75 or lower, from the viewpoint of stability when drawing a strand extruded from the extruder into a pelletizer to mold the strand into pellets.

A value of $S^B/S^A$ is more preferably 0.6 or higher, and still more preferably 1.0 or higher, but more preferably 2.0 or lower, and still more preferably 1.5 or lower.

It is more preferable that the method for producing a methacrylic resin of the present embodiment satisfies the following requirements (13) and (14).

Requirement (13) $25 \leq \theta^1 \leq 45$

Requirement (14) $10 \leq \theta^2 \leq 25$

Here, $\theta^1$ represents a retention time (min) in the first reaction tank 10 in the first polymerization step.

$\theta^2$ represents a retention time (min) in second reaction tank 20 in second polymerization step.

The method for producing a methacrylic resin of the present embodiment satisfies the requirements (13) and (14), such that the Charpy impact strength, the haze value (visible light transmittance), and the appearance of the molded body can be improved.

$\theta^1$ is more preferably 30 or more, and still more preferably 35 or more, from the viewpoint of further improving production efficiency, but is more preferably 40 or less, and still more preferably 38 or less, from the viewpoint of further improving production stability.

$\theta^2$ is more preferably 15 or more, and still more preferably 20 or more, from the viewpoint of further improving production efficiency, but is more preferably 23 or less, from the viewpoint of further improving production stability.

The method for producing a methacrylic resin of the present embodiment may further include an optional step known in the related art, in addition to the first polymerization step and the second polymerization step. Examples of the optional step include a step of removing a volatile component such as an unreacted raw material monomer from the methacrylic resin obtained in the second polymerization step, and a step of forming the methacrylic resin into a desired form such as pellets.

(Styrene-Maleic Anhydride Copolymer)

The methacrylic resin composition of the present embodiment contains a styrene-maleic anhydride copolymer having a structural unit derived from styrene and a structural unit derived from maleic anhydride.

In the present embodiment, examples of the monomer component that can constitute the "structural unit derived from styrene" that can be contained in the styrene-maleic anhydride copolymer include styrene which may have a substituent such as styrene or $\alpha$-methylstyrene. Preferred examples of the substituent include an alkyl group such as a methyl group and an ethyl group, and a halogen atom such as a chlorine atom and a bromine atom.

In the present embodiment, the maleic anhydride structural unit, which is a "structural unit derived from maleic anhydride" that can be contained in the styrene-maleic anhydride copolymer, is preferably a structural unit represented by the following Formula (1).

[Chem. 1]

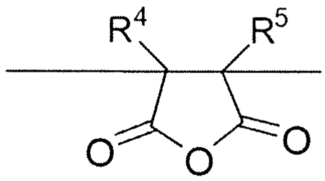

(1)

In Formula (1),

$R^4$ and $R^5$ each independently represent a hydrogen atom, a halogen atom, an aryl group optionally having a substituent having 6 or more and 20 or fewer carbon atoms, or an alkyl group optionally having a substituent having 1 or more and 20 or fewer carbon atoms, preferably an alkyl group optionally having a substituent having 1 or more and 12 or fewer carbon atoms, more preferably an alkyl group optionally having a substituent having 1 or more and 8 or fewer carbon atoms, and still more preferably an alkyl group optionally having a substituent having 1 or more and 6 or

fewer carbon atoms.

A hydrogen atom in the alkyl group or the aryl group that is $R^4$ or $R^5$ may be substituted with a hydroxy group.

The maleic anhydride structural unit represented by Formula (1) may be contained in a copolymer copolymerized using maleic anhydride which is a monomer component and may have a substituent.

Examples of the maleic anhydride which is a monomer component and may have a substituent include maleic anhydride, citraconic anhydride, dimethyl maleic anhydride, dichloro maleic anhydride, bromo maleic anhydride, dibromo maleic anhydride, phenyl maleic anhydride, and diphenyl maleic anhydride. Among these maleic anhydrides optionally having a substituent, maleic anhydride is preferably used because copolymerization for obtaining a copolymer can be easily performed.

In the present embodiment, a content of the structural unit derived from maleic anhydride that can be contained in the "styrene-maleic anhydride copolymer" is usually 10% by mass to 50% by mass, preferably 15% by mass to 35% by mass, and more preferably 18% by mass to 23% by mass, with respect to 100% by mass of the total content of all structural units included in the styrene-maleic anhydride copolymer, from the viewpoint of improving the Charpy impact strength, the haze value (visible light transmittance), and the appearance of the molded body.

In the present embodiment, the "styrene-maleic anhydride copolymer" can be produced by copolymerizing monomer components by any suitable conventionally known production method.

In the present embodiment, a commercially available product may be used as the "styrene-maleic anhydride copolymer". Examples of the commercially available "styrene-maleic anhydride copolymer" include product name Xiran SO023110 and product name Xiran SO26080 (both manufactured by Polyscope Corporation).

In the methacrylic resin composition of the present embodiment, from the viewpoint of improving the Charpy impact strength, the haze value (visible light transmittance), and the appearance of the molded body, the content of the methacrylic resin is preferably 50% by mass to 90% by mass, and more preferably 60% by mass to 80% by mass, and the content of the styrene-maleic anhydride copolymer is preferably 10% by mass to 50% by mass, and more preferably 20% by mass to 40% by mass, with respect to 100% by mass of the total content of the methacrylic resin and the styrene-maleic anhydride copolymer described above.

(Other Components)

The methacrylic resin composition of the present embodiment may contain, in addition to the methacrylic resin and the styrene-maleic anhydride copolymer described above, any other suitable component known in the related art, if necessary. In the present embodiment, examples of the "other components" that can be contained in the methacrylic resin composition include an antioxidant, a release agent, a rubber-like polymer, a thermal stabilizer, and an ultraviolet absorber.

The antioxidant used in the present embodiment is not particularly limited. Examples of the antioxidant include a phenol-based antioxidant, a sulfur-based antioxidant, and a phosphorus-based antioxidant. In the present embodiment, any suitable commercially available antioxidant known in the related art can also be used.

The release agent is a component used for improving moldability. The thermal stabilizer is a component used for suppressing pyrolysis. The ultraviolet absorber is a component used for suppressing deterioration due to ultraviolet rays.

In the present embodiment, the release agent is not particularly limited. Examples of the release agent include a higher fatty acid ester, a higher aliphatic alcohol, a higher fatty acid, a higher fatty acid amide, and a higher fatty acid metal salt. These release agents may be used alone or a mixture of two or more thereof.

A use amount of the release agent is preferably adjusted so as to be 0.01 to 1.0 parts by mass and is more preferably adjusted so as to be 0.01 to 0.50 parts by mass, with respect to 100 parts by mass of the methacrylic resin. In a case where the methacrylic resin composition of the present invention contains two or more methacrylic resins, in the present specification, "100 parts by mass of the methacrylic resin" means that a total amount of methacrylic resins is 100 parts by mass.

In the present embodiment, the thermal stabilizer is not particularly limited. Examples of the thermal stabilizer include a hindered phenol-based thermal stabilizer, a phosphorus-based thermal stabilizer, and an organic disulfide compound. Among them, an organic disulfide compound is preferably used. Note that the thermal stabilizers may be used alone or in combination of two or more thereof.

A use amount of the thermal stabilizer is preferably 1 to 2,000 mass ppm with respect to 100 parts by mass of the methacrylic resin. When the methacrylic resin composition (more specifically, the methacrylic resin composition after devolatilization) is molded to produce a molded body formed of the methacrylic resin composition, a molding temperature may be set to be higher to improve molding efficiency. In such a case, when a thermal stabilizer is blended, the methacrylic resin composition can be more effectively molded.

Examples of the ultraviolet absorber include a benzophenone-based ultraviolet absorber, a cyanoacrylate-based ultraviolet absorber, a benzotriazole-based ultraviolet absorber, a malonic acid ester-based ultraviolet absorber, and an oxalanilide-based ultraviolet absorber. These ultraviolet absorbers may be used alone or in combination of two or more

thereof. Among them, a benzotriazole-based ultraviolet absorber, a malonic acid ester-based ultraviolet absorber, or an oxalanilide-based ultraviolet absorber is preferably used.

A use amount of the ultraviolet absorber is preferably 5 to 1,000 mass ppm with respect to 100 parts by mass of the methacrylic resin contained in the methacrylic resin composition.

(Method for Producing Methacrylic Resin Composition)

Examples of the method for producing a methacrylic resin composition of the present embodiment include a kneading method in which the methacrylic resin and the styrene-maleic anhydride copolymer described above, and the other components described above such as an antioxidant, a release agent, a rubber-like polymer, a thermal stabilizer, and an ultraviolet absorber are kneaded.

In the present embodiment, as the kneading method, any conventionally known suitable kneading method such as a melt kneading method can be adopted.

In the present embodiment, the temperature condition in the kneading method is not particularly limited. The temperature condition can be any suitable condition in consideration of the selected component, the amount, the property, and the like. For example, in the melt-kneading method, for example, the temperature between the raw material charging port and the outlet of the extruder may be set to 180°C to 260°C.

In the present embodiment, as an equipment that can be used in the kneading method, any conventionally known suitable mixer or kneader can be used. Specific examples of such an equipment include a uniaxial kneader, a biaxial kneader, a multiaxial extruder, a Henschel mixer, a Banbury mixer, a kneader, and a roll mill. In addition, when the rotation speed needs to be further increased in the kneading method, for example, a high shearing machine may be used.

(Uses of Methacrylic Resin Composition)

According to the methacrylic resin composition of the present embodiment, it is possible to produce a shaping raw material which is a molded body having an excellent Charpy impact strength and haze value (visible light transmittance), and an excellent appearance.

Here, the shaping raw material refers to, for example, a part, a member, or a final product itself having a predetermined shape by applying predetermined heat and force to a material such as a resin composition, rubber, glass, or metal. That is, in the present embodiment, the shaping raw material is a molded body formed into a predetermined shape by molding the methacrylic resin composition described above. In the present embodiment, the shape, the size such as the thickness, and the like of the shaping raw material that can be produced are not particularly limited.

That is, the methacrylic resin composition of the present embodiment is preferably used as a material for a vehicle member such as a tail lamp cover, a head lamp cover, a visor, or a cover of a meter panel, an optical member such as a lens, a display protective plate, an optical film, or a light guide plate, or a member for a cosmetic container. Among them, the methacrylic resin composition can be particularly preferably used as a material for a vehicle member.

2. Molded Body

As described above, when the methacrylic resin composition of the present embodiment is used, a molded body having excellent properties can be produced.

A shaping raw material which is a molded body containing the methacrylic resin composition of the present embodiment and obtained by molding the methacrylic resin composition can be produced by any conventionally known suitable method such as an extrusion molding method or an injection molding method. Since the methacrylic resin composition of the present invention has excellent fluidity, it is preferable to produce a molded body by an injection molding method.

In the present embodiment, the molded body is preferably a molded body that contains at least one resin and satisfies the following requirements (21) to (23).

Requirement (21): a water absorption rate measured in the following procedures 1) to 3) is 1.5% by mass to 2.5% by mass.
Procedure 1): the molded body is pre-dried.
Procedure 2): the obtained molded body is allowed to stand in warm water at 80°C for 100 hours.
Procedure 3): the water absorption rate is calculated from the following equation.

Water absorption rate = ((mass of molded body after standing for 100 hours) - (mass of molded body before standing for 100 hours))/(mass of molded body before standing for 100 hours) × 100.

Requirement (22): a Charpy impact strength is 14 kJ/$m^2$ to 22 kJ/$m^2$.
Requirement (23): a Vicat softening temperature is 113°C to 130°C.

(Water Absorption Rate)

In the present embodiment, from the viewpoint of improving the Charpy impact strength, the haze value (visible light transmissivity), and the appearance of the molded body, the water absorption rate calculated by the procedures 1) to 3) according to the conventional method described above is usually 1.0% by mass to 3.6% by mass, preferably 1.5% by mass to 2.5% by mass, and more preferably 1.7% by mass to 2.1% by mass.
The step of pre-drying the molded body according to the procedure 1) of the above requirement (21) can be, for example, a step of pre-drying the molded body as a test piece in an oven under an atmosphere at 80°C for 24 hours or longer.

(Charpy Impact Strength)

In the present embodiment, the Charpy impact strength of the molded body is, for example, usually 14 kJ/$m^2$ to 22 kJ/$m^2$ and preferably 14.2 kJ/$m^2$ to 19.2 kJ/$m^2$ from the viewpoint of securing the strength required for the vehicle part described above.
Here, the "Charpy impact strength" is an index relating to a toughness (impact resistance) of the molded body, and is a parameter relating to an absorption energy for absorbing impact.
The "Charpy impact strength (kJ/$m^2$)" applied to the molded body of the present embodiment can be measured according to the normal method of preparing a predetermined sample of the molded body using any suitable measurement device known in the related art (for example, DG-CB, manufactured by Toyo Seiki Seisaku-sho, Ltd.).

(Vicat Softening Temperature)

In the molded body obtained by molding the methacrylic resin composition of the present embodiment, from the viewpoint of improving the heat resistance, the Vicat softening temperature (VST) measured according to a method in accordance with JIS K 7206 is usually 113°C to 130°C, and preferably 115.6°C to 124.3°C. The Vicat softening temperature can be appropriately set by adjusting the type of the monomer component, the ratio thereof, and the molecular weight of the methacrylic resin.

(Haze Value)

In the molded body obtained by molding the methacrylic resin composition of the present embodiment, the haze value (%) is usually 1.8% to 3.6%, and preferably 1.9% to 2.0%.
In the present embodiment, the haze value of the molded body can be measured in accordance with JIS K 7136 (ISO14782, Plastics-Determination of haze for transparent materials) applicable to materials having a haze value of 40% or less. Hereinafter, a specific description will be described.
First, the haze value refers to a percentage of transmitted light that is 0.044 rad (2.5°) or more higher than the incident light by forward scattering out of the transmitted light passing through the test piece that is the molded body of the present embodiment.
In the present embodiment, the haze value can be measured by any suitable device known in the related art. Examples of the device for measuring the haze value include a device including a stable light source, a connection optical system, an integrating sphere with an opening, and a photometer. The photometer preferably includes a light receiver, a signal processing device, and a display device or a recorder.
For the measurement of the haze value, a plurality of test pieces obtained by cutting out a molded body obtained by molding the above methacrylic resin composition can be used. The size of the test piece is not limited provided that it is large enough to cover the inlet opening and the compensation opening of the integrating sphere.
First, before the measurement of the haze value, the test piece is preferably conditioned for 15 minutes under the conditions of temperature (23 ± 2)°C and relative humidity (50 ± 10)% according to ISO291.
Next, the device used for the measurement is installed in an atmosphere maintained at a temperature (23 ± 2)°C and a relative humidity (50 ± 10)% if necessary, and the thermal equilibrium is reached after a sufficient period of time before the measurement.
Next, the test piece is installed in the device, the luminous flux of the incident light transmitted through the test piece is observed, and the haze value (%) is calculated by the following equation.

$$\text{Equation: Haze value} = [(\tau4/\tau2) - \tau3(\tau2/\tau1)] \times 100$$

In the above equation,

$\tau1$ represents the luminous flux of the incident light,
$\tau2$ represents the total luminous flux transmitted through the test piece,
$\tau3$ represents the light flux diffused by the device, and
$\tau4$ represents the light flux diffused by the device and the test piece.

EXAMPLES

Hereinafter, the present invention will be described in more detail with reference to Examples and Comparative Examples. The present invention is not limited to Examples described below.

<Method for Measuring Mw and Mw/Mn> (GPC Measurement)

A pellet-shaped methacrylic resin or styrene-maleic anhydride copolymer was analyzed by GPC measurement, and a mass average molecular weight (Mw) and the mass average molecular weight (Mw)/the number average molecular weight (Mn) were determined. The GPC measurement conditions are as follows.

(GPC Measurement Conditions)

· Measurement device: HLC-8320GPC, manufactured by Tosoh Corporation
· Column Configuration:

  Sample column: Two columns of TSKgel SuperMultipore HZ-M and one column of TSKguard Column SuperMP(HZ)-M were connected in series.
  Reference column: Two columns of TSKgel Super H-RC were connected in series. · Detector: reflective index (RI) (differential refractive) detector

· Calculation method: molecular weight calculation
· Internal standard: Chloroform was used as an internal standard.
· Allowable time at internal standard peak: 0.15 min
· Elution time at internal standard peak: An elution time of chloroform at the time of measuring a standard sample for a calibration curve was set as an elution time of an internal standard peak.
· Reference sample: THF (special grade, manufactured by FUJIFILM Wako Pure Chemical Corporation)
· Measurement sample: 25 mg of a methacrylic resin was sufficiently dissolved in 5 mL of a THF/chloroform solution in which chloroform (manufactured by FUJIFILM Wako Pure Chemical Corporation) as an internal standard was dissolved in THF (special grade, manufactured by FUJIFILM Wako Pure Chemical Corporation) to 0.04% by volume and used as a measurement sample.
· Column temperature: 40°C
· Injection amount: 10 μL
· Pump flow rate of sample: 0.35 mL/min
· Pump flow rate of reference: 0.60 mL/min

An RI detection intensity with respect to the elution time of the methacrylic resin was measured under the GPC measurement conditions described above. As a standard sample for creating a calibration curve, the following seven methacrylic resins (Shodex STANDARD M-75, manufactured by Showa Denko K.K.) whose monodisperse mass average molecular weights were known and peak molecular weights were different from each other as shown below were used.
· Standard sample 1: peak molecular weight: 1,050,000
· Standard sample 2: peak molecular weight: 569,000
· Standard sample 3: peak molecular weight: 211,000
· Standard sample 4: peak molecular weight: 68,800
· Standard sample 5: peak molecular weight: 18,500

· Standard sample 6: peak molecular weight: 7,360
· Standard sample 7: peak molecular weight: 3,070

The measurement was performed under the same conditions as in the measurement of the methacrylic resin described above using the standard sample for creating a calibration curve to determine an elution time at the peak top of each standard sample. The following cubic approximate expression was calculated from the obtained elution time and peak molecular weight and used as a calibration formula when analyzing the measurement results of the methacrylic resin.

·

$$\text{Log M (molecular weight)} = At^3 + Bt^2 + Ct + D \qquad \text{Equation:}$$

In the equation,
A, B, C, and D represent variables, and ·t represents an elution time.

<Method for Measuring Ratio (%) of Peak Area from Molecular Weight of 300,000 to End Point>

For the pellet-shaped methacrylic resin, the GPC curve obtained as described above was output at an interval of 500 m/sec of the elution time to create a differential molecular weight distribution curve.
When a point on a low molecular weight side was a point A (starting point) and a point of a high molecular weight side was a point B (end point), among points at which the obtained differential molecular weight distribution curve and the straight line of dW/d (logM) = 0 intersected, a ratio (%) of a peak area from a molecular weight 300,000 to the end point to a peak area from the point A to the point B, that is, from the starting point to the end point, was calculated.

<Method for Measuring Content of Methacrylic Acid Ester Structural Unit With Respect To Total Content of All Structural Units in Methacrylic Resin>

A content of a methacrylic acid ester structural unit with respect to a total content (100% by mass) of all structural units in a methacrylic resin was determined by decomposing the pellet-shaped methacrylic resin with a pyrolyzer, analyzing the methacrylic resin with a gas chromatography analyzer, and measuring a peak area corresponding to each of a methacrylic acid ester and an acrylic acid ester used as monomer components. The pyrolysis conditions in the pyrolyzer and the analysis conditions in the gas chromatography analyzer are as follows.

(Pyrolysis Conditions)

· Sample preparation: The methacrylic resin was precisely weighed (2 to 3 mg as a standard) and was put in the central portion of a metal cell formed into a gutter shape, and the metal cell was folded to enclose the methacrylic resin by lightly pressing both ends of the metal cell with a plier, thereby preparing a sample.
· Pyrolyzer: CURIE POINT PYROLYZER JHP-22 (manufactured by Japan Analytical Industry Co., Ltd.)
· Metal cell: Pyrofoil F590 (manufactured by Japan Analytical Industry Co., Ltd.)
· Set temperature of constant temperature tank: 200°C
· Set temperature of heat retention pipe: 250°C
· Pyrolysis temperature: 590°C
· Pyrolysis time: 5 sec

(Analysis Conditions)

· Gas chromatography analyzer: GC-14B (manufactured by Shimadzu Corporation)
· Detection method: FID
· Column: 7G 3.2m × 3.1 mmφ (manufactured by Shimadzu Corporation)
· Filler: FAL-M (manufactured by Shimadzu Corporation, packed column)
· Carrier gas: Air/$N_2$/$H_2$=50/100/50 (kPa), 80 mL/min
· Condition for increasing temperature of column: The temperature was maintained at 100°C for 15 minutes, the

temperature was increased to 150°C at a rate of 10°C/min, and then the temperature was maintained at 150°C for 14 minutes.

· Injection temperature: 200°C
· Detection temperature: 200°C

A peak area (a1) corresponding to the methacrylic acid ester and a peak area (b1) corresponding to the acrylic acid ester when detected under the above pyrolysis conditions and analysis conditions were determined. A peak area ratio A (= b1/a1) was determined using these peak areas (a1) and (b1).

Next, a standard product of a methacrylic resin in which a mass ratio of an acrylic acid ester structural unit to a methacrylic acid ester structural unit was known W0 (a mass of the acrylic acid ester structural unit/a mass of the methacrylic acid ester structural unit) was analyzed under the above pyrolysis conditions and analysis conditions to determine a peak area (a0) corresponding to the detected methacrylic acid ester and a peak area (b0) corresponding to the detected acrylic acid ester. A peak area ratio A0 (= b0/a0) was determined using these peak areas (a0) and (b0).

A factor f (= W0/A0) was determined using the peak area ratio A0 and the mass ratio W0.

Next, a mass ratio W of the acrylic acid ester structural unit to the methacrylic acid ester structural unit (the mass of the acrylic acid ester structural unit/the mass of the methacrylic acid ester structural unit) was determined by multiplying the peak area ratio A by the factor f, the acrylic acid ester structural unit and the methacrylic acid ester structural unit being included in the methacrylic resin to be measured. Each of a content (% by mass) of the methacrylic acid ester structural unit and a content (% by mass) of the acrylic acid ester structural unit with respect to 100% by mass of a total content of the methacrylic acid ester structural unit and the acrylic acid ester structural unit was calculated using the obtained mass ratio W.

Based on the obtained value, the content (% by mass) of the methyl methacrylate structural unit with respect to 100% by mass of the total content of the all structural units in the methacrylic resin was determined.

<Content of Maleic Anhydride Structural Unit in Styrene-Maleic Anhydride Copolymer>

Values described in the catalog value of Polyscope Corporation were used.

<Preparation Example 1: Preparation of Methacrylic Resin 1>

A methacrylic resin 1 was prepared using the continuous polymerization apparatus described above with reference to Fig. 1.

In the present embodiment, a complete mixing reaction tank having a capacity of 13 L was used as the first reaction tank 10, and a complete mixing reaction tank having a capacity of 8 L was used as the second reaction tank 20.

(First Polymerization Step)

In the first reaction tank 10, 98.44 parts by mass of methyl methacrylate, 1.40 parts by mass of methyl acrylate, 0.146 parts by mass of a chain transfer agent [n-octyl mercaptan], and 0.0142 parts by mass of a polymerization initiator [tert-amyl peroxy-2-ethylhexanoate] were mixed, thereby obtaining a syrup 1.

A flow rate was adjusted so that a retention time ($\theta^1$) of the syrup 1 in the first reaction tank 10 was 37.3 minutes.

A temperature of the jacket 13 surrounding an outer wall surface of the first reaction tank 10 was adjusted, a temperature in the first reaction tank 10 was set to 140°C, and continuous bulk polymerization was performed, thereby obtaining a reaction mixture 1.

(Second Polymerization Step)

The raw material monomer solution was obtained by mixing 96.84 parts by mass of methyl methacrylate, 1.4 parts by mass of methyl acrylate, 1.673 parts by mass of a chain transfer agent [n-octyl mercaptan], and 0.0915 parts by mass of a polymerization initiator [1,1-di(tert-butylperoxy)cyclohexane].

In the second reaction tank 20, feeding was performed by adjusting a flow rate so that the raw material monomer solution and the reaction mixture 1 were mixed in a mass ratio of 1:10.2. As a result, a mixture of the raw material monomer solution and the reaction mixture 1 was obtained.

A flow rate was adjusted so that a retention time ($\theta^2$) of the mixture in the second reaction tank 20 was 22.3 minutes. A temperature of the jacket 23 surrounding an outer wall surface of the second reaction tank 20 was adjusted, a temperature in the second reaction tank 20 was set to 175°C, and continuous bulk polymerization was performed, thereby obtaining a reaction mixture 2.

The continuous bulk polymerization was performed in a state where the first reaction tank 10 and the second

reaction tank 20 were filled with a reaction mixture (mixed solution) and a gas phase was not substantially present (in a state of full solution).

The reaction mixture 2 in the second reaction tank 20 was continuously extracted from the extraction port 21b positioned at the top of the second reaction tank 20.

The extracted reaction mixture 2 was introduced into the pre-heater 31 through the extraction line 25. Next, the introduced reaction mixture 2 was heated to 200°C in the pre-heater 31, the heated reaction mixture was introduced into the devolatilization extruder 33 with a vent, and volatile components such as unreacted raw material monomers were removed at 250°C, thereby obtaining a methacrylic resin 1.

The obtained methacrylic resin 1 was extruded in a molten state from the devolatilization extruder 33 with a vent, cooling was performed with water, cutting was performed, and the methacrylic resin was discharged from the discharge line 35, thereby obtaining a pellet-shaped methacrylic resin 1.

The content of the methyl methacrylate structural unit included in the methacrylic resin 1 was 98.4% by mass, and the content of the methyl acrylate structural unit was 1.6% by mass.

<Preparation Example 2: Preparation of Methacrylic Resin 2>

To the reaction tank, 97.0 parts by mass of methyl methacrylate, 2.89 parts by mass of methyl acrylate, 0.0850 parts by mass of a chain transfer agent [n-octyl mercaptan], and 0.0160 parts by mass of a polymerization initiator [1,1-di(tert-butylperoxy)cyclohexane] were continuously fed, and then polymerization was performed under conditions of 175°C and an average retention time of 36.1 minutes, thereby obtaining a reaction mixture.

The obtained reaction mixture was introduced into the devolatilization extruder, and volatile components such as unreacted raw material monomers were removed at 250°C, thereby obtaining a methacrylic resin 2.

The obtained methacrylic resin 2 was extruded in a molten state from the devolatilization extruder, cooling was performed with water, cutting was performed, and the methacrylic resin was discharged from the discharge line, thereby obtaining a pellet-shaped methacrylic resin 2.

The content of the methyl methacrylate structural unit included in the methacrylic resin 2 was 96.7% by mass, and the content of the methyl acrylate structural unit was 3.3% by mass.

<Preparation Example 3: Preparation of Methacrylic Resin 3>

To the reaction tank, 93.0 parts by mass of methyl methacrylate, 7.00 parts by mass of methyl acrylate, 0.318 parts by mass of a chain transfer agent [n-octyl mercaptan], and 0.0124 parts by mass of a polymerization initiator [tert-amyl peroxy-2-ethylhexanoate] were continuously fed, and then polymerization was performed under conditions of 140°C and an average retention time of 59.1 minutes, thereby obtaining a reaction mixture.

The obtained reaction mixture was introduced into the devolatilization extruder, and volatile components such as unreacted raw material monomers were removed at 250°C, thereby obtaining a methacrylic resin 3.

The obtained methacrylic resin 3 was extruded in a molten state from the devolatilization extruder, cooling was performed with water, cutting was performed, and the methacrylic resin was discharged from the discharge line, thereby obtaining a pellet-shaped methacrylic resin 3.

The content of the methyl methacrylate structural unit included in the methacrylic resin 3 was 93.9% by mass, and the content of the methyl acrylate structural unit was 6.1% by mass.

<Styrene-Maleic Anhydride Copolymer>

As the styrene-maleic anhydride copolymer (styrene-maleic anhydride copolymers 1 and 2), the following two products manufactured by Polyscope Corporation were used.

Styrene-maleic anhydride copolymer 1 (product 1): product name Xiran SO23110, manufactured by Polyscope Corporation

Styrene-maleic anhydride copolymer 2 (product 2): product name Xiran SO26080, manufactured by Polyscope Corporation

<Example 1: Methacrylic Resin Composition (1)>

Using a twin screw extruder (model: TEX30SS-30AW-2V, manufactured by The Japan Steel Works, Ltd.), 80 parts by mass of the methacrylic resin 1 and 20 parts by mass of the styrene-maleic anhydride copolymer 1 were melt-kneaded under the following melt-kneading conditions to be extruded into a strand, cooled with water to be solidified, and cut with a strand cutter, thereby obtaining a pellet-shaped methacrylic resin composition (1). Note that the molecular weight and the like are shown in the following Table 1 (the same applies to the following Examples and Comparative Examples).

(Melt-Kneading Conditions)

As for the temperature of the extruder, eight heaters disposed apart from each other between the raw material charging port and outlet was set to 230°C, 235°C, 240°C, 265°C, 265°C, 265°C, 265°C, and 265°C from the raw material charging port, respectively. The screw rotation speed and the charging speed of the raw material are as follows.

· Screw rotation speed: 80 rpm
· Charging speed of raw material: 7 kg/hr

<Example 2: Methacrylic Resin Composition (2)>

A methacrylic resin composition (2) was obtained in the same manner as in Example 1, except that 75 parts by mass of the methacrylic resin 1 and 25 parts by mass of the styrene-maleic anhydride copolymer 1 were mixed.

<Example 3: Methacrylic Resin Composition (3)>

A methacrylic resin composition (3) was obtained in the same manner as in Example 1, except that 70 parts by mass of the methacrylic resin 1 and 30 parts by mass of the styrene-maleic anhydride copolymer 1 were mixed.

<Example 4: Methacrylic Resin Composition (4)>

A methacrylic resin composition (4) was obtained in the same manner as in Example 1, except that 60 parts by mass of the methacrylic resin 1 and 40 parts by mass of the styrene-maleic anhydride copolymer 1 were mixed.

<Example 5: Methacrylic Resin Composition (5)>

A methacrylic resin composition (5) was obtained in the same manner as in Example 1, except that 80 parts by mass of the methacrylic resin 2 and 20 parts by mass of the styrene-maleic anhydride copolymer 1 were mixed.

<Example 6: Methacrylic Resin Composition (6)>

A methacrylic resin composition (6) was obtained in the same manner as in Example 1, except that 75 parts by mass of the methacrylic resin 2 and 25 parts by mass of the styrene-maleic anhydride copolymer 1 were mixed.

<Example 7: Methacrylic Resin Composition (7)>

A methacrylic resin composition (7) was obtained in the same manner as in Example 1, except that 70 parts by mass of the methacrylic resin 2 and 30 parts by mass of the styrene-maleic anhydride copolymer 1 were mixed.

<Example 8: Methacrylic Resin Composition (8)>

A methacrylic resin composition (8) was obtained in the same manner as in Example 1, except that 60 parts by mass of the methacrylic resin 2 and 40 parts by mass of the styrene-maleic anhydride copolymer 1 were mixed.

<Example 9: Methacrylic Resin Composition (9)>

A methacrylic resin composition (9) was obtained in the same manner as in Example 1, except that 70 parts by mass of the methacrylic resin 2 and 30 parts by mass of the styrene-maleic anhydride copolymer 2 were mixed. Note that the molecular weight and the like are shown in the following Table 2 (the same applies hereinafter).

<Example 10: Methacrylic Resin Composition (10)>

A methacrylic resin composition (10) was obtained in the same manner as in Example 1, except that 70 parts by mass of the methacrylic resin 1 and 30 parts by mass of the styrene-maleic anhydride copolymer 2 were mixed.

<Example 11: Methacrylic Resin Composition (11)>

A methacrylic resin composition (11) was obtained in the same manner as in Example 1, except that 70 parts by

mass of the methacrylic resin 2, 30 parts by mass of the styrene-maleic anhydride copolymer 2, and 0.05 parts by mass of a phosphorus-based antioxidant (Irgafos 168, manufactured by BASF Japan Ltd.).

<Comparative Example 1: Methacrylic Resin Composition (C1) >

A methacrylic resin composition (C1) was obtained in the same manner as in Example 1, except that 70 parts by mass of the methacrylic resin 3 and 30 parts by mass of the styrene-maleic anhydride copolymer 2 were mixed.

<Comparative Example 2: Methacrylic Resin Composition (C2) >

A methacrylic resin composition (C2) was obtained in the same manner as in Example 1, except that 70 parts by mass of the methacrylic resin 3, 30 parts by mass of the styrene-maleic anhydride copolymer 2, and 0.05 parts by mass of a phosphorus-based antioxidant (Irgafos 168, manufactured by BASF Japan Ltd.).

<Method for Evaluating Water Absorption Rate>

Each of the methacrylic resin compositions obtained in Examples and Comparative Examples described above was pre-dried in an oven under an atmosphere at 80°C for 12 hours or longer, and the dried methacrylic resin composition was subjected to injection molding into a mold using an injection molding machine (Si-180V CH450C, manufactured by Toyo Machinery & Metal Co., Ltd., equipped with a hopper and heaters 1 to 5), thereby obtaining a test piece as a molded body of 50 mm long × 50 mm wide × 3 mm thick.

Here, a configuration example of the mold used in the present embodiment will be described with reference to Fig. 2. Fig. 2 is a schematic view showing the configuration example of the mold.

As illustrated in Fig. 2, in this configuration example, a mold 37 is a mold-shaped member capable of defining a flat plate-shaped (substantially rectangular parallelepiped) inner space of 50 mm long × 50 mm wide × 3 mm thick. A gate 36, which is an opening for introducing the methacrylic resin composition into the mold 37, is provided near one of the two corner portions on the upper side of the mold 37. The size of the gate 36 is 4 mm in width, 3 mm in depth, and 3 mm in height in the configuration example.

Injection conditions in the injection molding are as follows.

(Injection Conditions)

· Molding temperature setting
Heater 1: 260°C, heater 2: 260°C, heater 3: 260°C, heater 4: 240°C, heater 5: 220°C, hopper: 60°C
· Mold temperature: 60°C
· Injection speed: 90 mm/sec
· Holding pressure: 100 MPa
· Holding pressure switching position: 5 mm
· Holding pressure time: 10 sec
· Holding pressure rate: 10 mm/s
· Cooling time: 35 sec
· Screw rotation speed during weighing: 100 rpm
· Back pressure: 9 MPa
· Weighing position of screw: 28 mm

A molded body 40 molded using the mold 37 illustrated in Fig. 2 will be described with reference to Fig. 3. Fig. 3 is a schematic view for explaining a configuration example of a molded body.

As illustrated in Fig. 3, the molded body 40 is a molded body molded by the mold 37 described above. In the configuration example, the molded body 40 has a gate-corresponding region 40a that is formed due to the gate 36 of the mold 37 and has a protruding shape in this example. Specifically, the size (the gate-corresponding region 40a is excluded) of the molded body 40 is 50 mm long × 50 mm wide × 3 mm thick. More specifically, in Fig. 2, a width W1 is 38 mm, a width W2 of the gate-corresponding region 40a caused by the gate 36 is 4 mm, and a width W3 is 8 mm. An incident opening 50 will be described below.

The obtained test piece was pre-dried in an oven under an atmosphere at 80°C for 24 hours or longer, and then left to stand in warm water at 80°C for 100 hours. The mass of the test piece before the test and the mass of the test piece after the test were measured, and the water absorption rate was determined from the following equation.

Equation: water absorption rate = ((mass of test piece after standing for 100 hours) - (mass of test piece before standing))/(mass of test piece before standing) × 100

<Method for Evaluating Charpy Impact Strength>

A methacrylic resin composition was subjected to injection molding using an injection molding machine (EC130SXII-4A, manufactured by SHIBAURA MACHINE CO., LTD.), thereby obtaining a test piece of 80 mm long × 10 mm wide × 4 mm thick. The injection conditions are as follows.

(Injection Conditions)

· Molding temperature setting
Heater 1: 260°C, heater 2: 260°C, heater 3: 260°C, heater 4: 240°C, heater 5: 220°C, hopper: 60°C
· Mold temperature: 60°C
· Injection speed: 90 mm/sec
· Holding pressure: 130 MPa
· Holding pressure switching position: 5 mm
· Holding pressure time: 8 sec
· Holding pressure rate: 10 mm/s
· Cooling time: 35 sec
· Screw rotation speed during weighing: 50 rpm
· Back pressure: 14 MPa
· Weighing position of screw: 44 mm

The strength measured under the following measurement conditions was defined as a Charpy impact strength.

(Measurement conditions)

· Annealing: 83°C, 16 hours
· Test device: DG-CB manufactured by Toyo Seiki Seisaku-sho, Ltd.
· Hammer: 4J
· Test direction: edgewise
· Calculate average value of three trial times

<Method for Evaluating Vicat Softening Temperature>

A methacrylic resin composition was pre-dried in an oven under an atmosphere at 80°C for 12 hours or longer, and the dried methacrylic resin composition was subjected to injection molding into using an injection molding machine (Si-180V CH450C, manufactured by Toyo Machinery & Metal Co., Ltd., equipped with a hopper and heaters 1 to 5), thereby obtaining a test piece of 25 mm long × 25 mm wide × 3 mm thick. The injection conditions are as follows.

(Injection Conditions)

· Molding temperature setting
Heater 1: 260°C, heater 2: 260°C, heater 3: 260°C, heater 4: 240°C, heater 5: 220°C, hopper: 60°C
· Mold temperature: 60°C
· Injection speed: 90 mm/sec
· Holding pressure: 130 MPa
· Holding pressure switching position: 5 mm
· Holding pressure time: 8 sec
· Holding pressure rate: 10 mm/s
· Cooling time: 35 sec

· Screw rotation speed during weighing: 50 rpm
· Back pressure: 14 MPa
· Weighing position of screw: 20 mm

A Vicat softening temperature (°C) of the test piece conditioned under the following conditions was measured in accordance with JIS K7206 (B50 method) using a heat distortion tester ("148-6 series", manufactured by YASUDA SEIKI SEISAKUSHO, LTD.).

(Conditions)

· Condition adjustment of test piece: The test piece was allowed to stand at 83°C for 16 hours, and then cooled in a desiccator at 23 ± 5°C for 1 hour or longer.

<Method for Evaluating Haze Value>

The haze value of a test piece of 50 mm long × 50 mm wide × 3 mm thick obtained in the same manner as in <Method for Evaluating Water Absorption Rate> described above was measured in accordance with JIS K7136 using a color information measuring device (SD-7000, manufactured by NIPPON DENSHOKU INDUSTRIES Co., Ltd.).
The measurement point of the haze value in the test piece is illustrated in Fig. 3. The measurement was performed with a position of an incident opening 38 in the test piece when the haze value was measured as the position illustrated in Fig. 3. Specifically, in this example, the incident opening 38 is circular with a center C, and a diameter d of the incident opening 38 is 28 mm. A distance L1 from the upper end where the gate-corresponding region 40a is present to the center C is 25 mm, and a distance L2 from the right end to the center C is 18 mm. The measurement results of the haze value are shown in the following Tables 1 and 2.

<Method for Evaluating Appearance>

The appearance of a test piece of 50 mm long × 50 mm wide × 3 mm thick obtained as described above was visually observed and evaluated on the basis of the following evaluation criteria. The results are shown in the following Tables 1 and 2. In addition, the appearances of the test pieces as the molded bodies according to Example 1, Example 5, and Comparative Example 1 were illustrated in Fig. 4. Fig. 4 is a photograph showing the appearance of the molded body.

(Evaluation Criteria)

· ◎ (Excellent): No clear white turbidity phenomenon was observed.
· ○ (Good): A clear white turbidity phenomenon was observed in the vicinity of the gate-corresponding region 40a caused by the gate 36 of the mold 37, but its degree was small.
· × (Not acceptable): A clear white turbidity phenomenon was observed particularly in the vicinity of the gate-corresponding region 40a, and its degree was large.

[Table 1]

(Table 1)

| | | Example 1 | Example 2 | Example 3 | Example 4 | Example 5 | Example 6 | Example 7 | Example 8 |
|---|---|---|---|---|---|---|---|---|---|
| Methacrylic resin | Preparation Example | 1 | 1 | 1 | 1 | 2 | 2 | 2 | 2 |
| | Mw(g/mol) | 107000 | 107000 | 107000 | 107000 | 157000 | 157000 | 157000 | 157000 |
| | Mw/Mn(-) | 2.5 | 2.5 | 2.5 | 2.5 | 2.0 | 2.0 | 2.0 | 2.0 |
| | Ratio (%) of peak area from molecular weight of 300,000 to end point | 5.5 | 5.5 | 5.5 | 5.5 | 12.1 | 12.1 | 12.1 | 12.1 |
| Styrene-maleic anhydride copolymer | Product | 1 | 1 | 1 | 1 | 1 | 1 | 1 | 1 |
| | Mw(g/mol) | 106000 | 106000 | 106000 | 106000 | 106000 | 106000 | 106000 | 106000 |
| | Mw/Mn(-) | 2.0 | 2.0 | 2.0 | 2.0 | 2.0 | 2.0 | 2.0 | 2.0 |
| | Content (% by mass) of structural unit of maleic anhydride | 23 | 23 | 23 | 23 | 23 | 23 | 23 | 23 |
| Mixing ratio | Methacrylic resin (% by mass) | 80 | 75 | 70 | 60 | 80 | 75 | 70 | 60 |
| | Styrene-maleic anhydride copolymer (% by mass) | 20 | 25 | 30 | 40 | 20 | 25 | 30 | 40 |
| Water absorption rate (% by mass) | | 2.0 | 1.9 | 1.8 | 1.7 | 2.1 | 2.0 | 1.7 | 1.8 |
| Charpy impact strength (kJ/$m^2$) | | 15.8 | 15.4 | 150 | 14.2 | 19.2 | 17.1 | 15.9 | 15.6 |
| Vicat softening temperature (°C) | | 116.4 | 118.4 | 120.0 | 124.3 | 113.8 | 115.6 | 117.8 | 121.8 |
| Haze value (%) | | 1.8 | 2.0 | 1.9 | 1.9 | 1.9 | 1.9 | 2.0 | 2.0 |
| Appearance | | ⊙ | ⊙ | ⊙ | ⊙ | ○ | ○ | ○ | ○ |

[Table 2]

(Table 2)

| | | Example 9 | Example 10 | Example 11 | Comparative Example 1 | Comparative Example 2 |
|---|---|---|---|---|---|---|
| Methacrylic resin | Preparation Example | 2 | 1 | 2 | 3 | 3 |
| | Mw(g/mol) | 157000 | 107000 | 157000 | 64000 | 64000 |

| | | | | | | |
|---|---|---|---|---|---|---|
| | Mw/Mn(-) | 2.0 | 2.5 | 2.0 | 1.8 | 1.8 |
| | Ratio (%) of peak area from molecular weight of 300,000 to end point | 12.1 | 5.5 | 12.1 | 0.6 | 0.6 |
| Styrene-maleic anhydride copolymer | Product | 2 | 2 | 2 | 2 | 2 |
| | Mw(g/mol) | 73000 | 73000 | 73000 | 73000 | 73000 |
| | Mw/Mn(-) | 1.9 | 1.9 | 1.9 | 1.9 | 1.9 |
| | Content (% by mass) of structural unit of maleic anhydride | 26 | 26 | 26 | 26 | 26 |
| Mixing ratio | Methacrylic resin (% by mass) | 70 | 70 | 70 | 70 | 70 |
| | Styrene-maleic anhydride copolymer (% by mass) | 30 | 30 | 30 | 30 | 30 |
| Water absorption rate (% by mass) | | 2.0 | 1.9 | 2.0 | 1.9 | 1.9 |
| Charpy impact strength (kJ/m$^2$) | | 15.1 | 15.4 | 15.1 | 13.2 | 13.2 |
| Vicat softening temperature (°C) | | 119.2 | 121.4 | 119.2 | 118.4 | 118.4 |
| Haze value (%) | | 3.6 | 2.9 | 3.6 | 7.9 | 7.9 |
| Appearance | | ○ | ○ | ○ | × | × |

According to Examples satisfying the requirements according to the present invention described above, it has been possible to effectively suppress the occurrence of "flow-induced phase separation" caused by the progress of filling of the methacrylic resin composition in the mold, and as a result, it has been possible to suppress the occurrence of white turbidity particularly in the vicinity of the gate (gate-corresponding region) of the molded body, more specifically in the region where the filling timing was delayed in the mold (in the vicinity of the outer edge portion on the upper right side in the illustrated example), and further in the entire region of the molded body, and to produce a molded body having an excellent haze value, in other words, transparency (visible light transmittance) and an excellent appearance. On the other hand, according to Comparative Examples not satisfying at least one of the requirements according to the present invention, white turbidity occurred in the molded body, the haze value (transparency) was deteriorated, and the appearance was poor. In addition, according to Examples of the present invention, not only the transparency and the appearance were excellent, but also the excellent Charpy impact strength was realized, and furthermore, the properties such as the water absorption rate and the Vicat softening temperature was simultaneously improved.

<Preparation Example 4: Preparation of Methacrylic Resin 4>

A methacrylic resin 4 was prepared using the continuous polymerization apparatus described above with reference to Fig. 1.

In the present embodiment, a complete mixing reaction tank having a capacity of 13 L was used as the first reaction tank 10, and a complete mixing reaction tank having a capacity of 8 L was used as the second reaction tank 20.

(First Polymerization Step)

In the first reaction tank 10, 99.8 parts by mass of methyl methacrylate, 0.500 parts by mass of methyl acrylate, 0.101 parts by mass of a chain transfer agent [n-octyl mercaptan], 0.100 parts by mass of a release agent [stearyl alcohol], and 0.00850 parts by mass of a polymerization initiator [t-amyl peroxy-2-ethylhexanoate] were mixed, thereby obtaining a syrup (4-1).

A flow rate was adjusted so that a retention time ($\theta^1$) of the syrup (4-1) in the first reaction tank 10 was 61.8 minutes.

A temperature of the jacket 13 surrounding an outer wall surface of the first reaction tank 10 was adjusted, a temperature in the first reaction tank 10 was set to 127°C, and continuous bulk polymerization was performed, thereby obtaining a reaction mixture (4-1).

(Second Polymerization Step)

The raw material monomer solution was obtained by mixing 95.1 parts by mass of methyl methacrylate, 0.500 parts by mass of methyl acrylate, 4.33 parts by mass of a chain transfer agent [n-octyl mercaptan], and 0.0696 parts by

mass of a polymerization initiator [1,1-di(tert-butylperoxy) cyclohexane].

In the second reaction tank 20, feeding was performed by adjusting a flow rate so that the raw material monomer solution and the reaction mixture (4-1) were mixed in a mass ratio of 1:9.7. As a result, a mixture of the raw material monomer solution and the reaction mixture (4-1) was obtained.

A flow rate was adjusted so that a retention time ($\theta^2$) of the mixture in the second reaction tank 20 was 37.5 minutes. A temperature of the jacket 23 surrounding the outer wall surface of the second reaction tank 20 was adjusted, the temperature in the second reaction tank 20 was set to 186°C, and continuous bulk polymerization was performed, thereby obtaining a reaction mixture (4-2).

The continuous bulk polymerization was performed in a state where the first reaction tank 10 and the second reaction tank 20 were filled with a reaction mixture (mixed solution) and a gas phase was not substantially present (in a state of full solution).

The reaction mixture (4-2) in the second reaction tank 20 was continuously extracted from the extraction port 21b positioned at the top of the second reaction tank 20.

The extracted reaction mixture (4-2) was introduced into the pre-heater 31 through the extraction line 25. Next, the introduced reaction mixture (4-2) was heated to 200°C in the pre-heater 31, the heated reaction mixture was introduced into the devolatilization extruder 33 with a vent, and volatile components such as unreacted raw material monomers were removed at 250°C, thereby obtaining a methacrylic resin 4.

The obtained methacrylic resin 4 was extruded in a molten state from the devolatilization extruder 33 with a vent, cooling was performed with water, cutting was performed, and the methacrylic resin was discharged from the discharge line 35, thereby obtaining a pellet-shaped methacrylic resin 4.

The content of the methyl methacrylate structural unit included in the methacrylic resin 4 was 99.3% by mass, and the content of the methyl acrylate structural unit was 0.7% by mass.

<Preparation Example 5: Preparation of Methacrylic Resin 5>

To the reaction tank, 96.8 parts by mass of methyl methacrylate, 2.95 parts by mass of methyl acrylate, 0.178 parts by mass of a chain transfer agent [n-octyl mercaptan], and 0.0323 parts by weight of 1,1-di(t-butylperoxy) cyclohexane were continuously fed, and then polymerization was performed under conditions of 175°C and an average retention time of 27.0 minutes, thereby obtaining a reaction mixture.

The obtained reaction mixture was introduced into the devolatilization extruder, and volatile components such as unreacted raw material monomers were removed at 250°C, thereby obtaining a methacrylic resin 5.

The obtained methacrylic resin 5 was extruded in a molten state from the devolatilization extruder, cooling was performed with water, cutting was performed, and the methacrylic resin was discharged from the discharge line, thereby obtaining a pellet-shaped methacrylic resin 5.

The content of the methyl methacrylate structural unit included in the methacrylic resin 5 was 96.6% by mass, and the content of the methyl acrylate structural unit was 3.4% by mass.

<Preparation Example 6: Preparation of Methacrylic Resin 6>

To the reaction tank, 97.3 parts by mass of methyl methacrylate, 2.50 parts by mass of methyl acrylate, 0.162 parts by mass of a chain transfer agent [n-octyl mercaptan], and 0.0171 parts by weight of 1,1-di(t-butylperoxy) cyclohexane were continuously fed, and then polymerization was performed under conditions of 175°C and an average retention time of 27.0 minutes, thereby obtaining a reaction mixture.

The obtained reaction mixture was introduced into the devolatilization extruder, and volatile components such as unreacted raw material monomers were removed at 250°C, thereby obtaining a methacrylic resin 6.

The obtained methacrylic resin 6 was extruded in a molten state from the devolatilization extruder, cooling was performed with water, cutting was performed, and the methacrylic resin was discharged from the discharge line, thereby obtaining a pellet-shaped methacrylic resin 6.

The content of the methyl methacrylate structural unit included in the methacrylic resin 6 was 97.2% by mass, and the content of the methyl acrylate structural unit was 2.8% by mass.

<Preparation Example 7: Preparation of Methacrylic Resin 7>

Using a twin screw extruder (model: TEX30SS-30AW-2V, manufactured by The Japan Steel Works, Ltd.), 77.75 parts by mass of the methacrylic resin 4 and 22.25 parts by mass of the methacrylic resin 5 were melt-kneaded under the following melt-kneading conditions to be extruded into a strand, cooled with water to be solidified, and cut with a strand cutter, thereby obtaining a pellet-shaped methacrylic resin composition 7.

(Melt-Kneading Conditions)

As for the temperature of the extruder, eight heaters disposed apart from each other between the raw material charging port and outlet was set to 230°C, 235°C, 240°C, 265°C, 265°C, 265°C, 265°C, and 265°C from the raw material charging port, respectively. The screw rotation speed and the charging speed of the raw material are as follows.

- · Screw rotation speed: 80 rpm
- · Charging speed of raw material: 7 kg/hr

The content of the methyl methacrylate structural unit included in the methacrylic resin 7 was 98.6% by mass, and the content of the methyl acrylate structural unit was 1.4% by mass.

<Preparation Example 8: Preparation of Methacrylic Resin 8>

A methacrylic resin 8 was obtained in the same manner as in the above Preparation Example 7, except that 38.75 parts by mass of the methacrylic resin 4, 11.25 parts by mass of the methacrylic resin 5, and 50 parts by mass of the methacrylic resin 6 were mixed.

The content of the methyl methacrylate structural unit included in the methacrylic resin 8 was 98.6% by mass, and the content of the methyl acrylate structural unit was 2.1% by mass.

<Example 12: Methacrylic Resin Composition (12)>

Using a twin screw extruder (model: TEX30SS-30AW-2V, manufactured by The Japan Steel Works, Ltd.), 70 parts by mass of the methacrylic resin 7 and 30 parts by mass of the styrene-maleic anhydride copolymer 1 were melt-kneaded under the following melt-kneading conditions to be extruded into a strand, cooled with water to be solidified, and cut with a strand cutter, thereby obtaining a pellet-shaped methacrylic resin composition (12).

(Melt-Kneading Conditions)

As for the temperature of the extruder, eight heaters disposed apart from each other between the raw material charging port and outlet was set to 230°C, 235°C, 240°C, 265°C, 265°C, 265°C, 265°C, and 265°C from the raw material charging port, respectively. The screw rotation speed and the charging speed of the raw material are as follows.

- · Screw rotation speed: 80 rpm
- · Charging speed of raw material: 7 kg/hr

<Styrene-Maleic Anhydride Copolymer>

As the styrene-maleic anhydride copolymer (styrene-maleic anhydride copolymers 3 and 4), the following four products manufactured by Polyscope Corporation and Jiaxing Huawen Chemical Co., Ltd. were used.

Styrene-maleic anhydride copolymer 3 (product 3): product name Xiran 2000, manufactured by Polyscope Corporation

Styrene-maleic anhydride copolymer 4 (product 4): product name SMA700 manufactured by Jiaxing Huawen Chemical Co., Ltd.

<Content of Maleic Anhydride Structural Unit in Styrene-Maleic Anhydride Copolymer>

Catalog values of Polyscope Corporation and Jiaxing Huawen Chemical Co., Ltd. were used.

<Example 13: Methacrylic Resin Composition (13)>

A methacrylic resin composition (14) was obtained in the same manner as in Example 12, except that 70 parts by mass of the methacrylic resin 6 and 30 parts by mass of the styrene-maleic anhydride copolymer 1 were mixed.

<Example 14: Methacrylic Resin Composition (14)>

A methacrylic resin composition (14) was obtained in the same manner as in Example 12, except that 70 parts by mass of the methacrylic resin 8 and 30 parts by mass of the styrene-maleic anhydride copolymer 1 were mixed.

<Example 15: Methacrylic Resin Composition (15)>

A methacrylic resin composition (15) was obtained in the same manner as in Example 12, except that 85 parts by mass of the methacrylic resin 2 and 15 parts by mass of the styrene-maleic anhydride copolymer 3 were mixed.

<Example 16: Methacrylic Resin Composition (16)>

A methacrylic resin composition (16) was obtained in the same manner as in Example 12, except that 70 parts by mass of the methacrylic resin 1 and 30 parts by mass of the styrene-maleic anhydride copolymer 4 were mixed.

<Example 17: Methacrylic Resin Composition (17)>

A methacrylic resin composition (17) was obtained in the same manner as in Example 12, except that 40 parts by mass of the methacrylic resin 1 and 60 parts by mass of the styrene-maleic anhydride copolymer 1 were mixed.

<Example 18: Methacrylic Resin Composition (18)>

A methacrylic resin composition (18) was obtained in the same manner as in Example 12, except that 90 parts by mass of the methacrylic resin 1 and 10 parts by mass of the styrene-maleic anhydride copolymer 1 were mixed.

<Comparative Example 3: Methacrylic Resin Composition (C3) >

A methacrylic resin composition (C3) was obtained in the same manner as in Example 12, except that 70 parts by mass of the methacrylic resin 4 and 30 parts by mass of the styrene-maleic anhydride copolymer 1 were mixed.

[Table 3]

| | | Example 12 | Example 13 | Example 14 | Example 15 | Example 16 | Example 17 | Example 18 | Comparative Example 3 |
|---|---|---|---|---|---|---|---|---|---|
| Methacrylic resin | Preparation Example | 7 | 6 | 8 | 2 | 1 | 1 | 1 | 4 |
| | Mw(g/mol) | 124000 | 111000 | 117500 | 157000 | 107000 | 107000 | 107000 | 146000 |
| | Mw/Mn(-) | 3.9 | 2.0 | 3.0 | 2.0 | 2.5 | 2.5 | 2.5 | 5.1 |
| | Ratio (%) of peak area from molecular weight of 300,000 to end point | 9.9 | 3.8 | 6.9 | 12.1 | 5.5 | 5.5 | 5.5 | 15.2 |
| Styrene-maleic anhydride copolymer | Product | 1 | 1 | 1 | 3 | 4 | 1 | 1 | 1 |
| | Mw(g/mol) | 106000 | 106000 | 106000 | 6500 | 130000 | 106000 | 106000 | 106000 |
| | Mw/Mn(-) | 2.0 | 2.0 | 2.0 | 2.4 | 2.0 | 2.0 | 2.0 | 2.0 |
| | Content (% by mass) of structural unit of maleic anhydride | 23 | 23 | 23 | 33 | 18 | 23 | 23 | 23 |
| Mixing ratio | Methacrylic resin (% by mass) | 70 | 70 | 70 | 85 | 70 | 40 | 90 | 70 |
| | Styrene-maleic anhydride copolymer (% by mass) | 30 | 30 | 30 | 15 | 30 | 60 | 10 | 30 |
| Water absorption rate (% by mass) | | 1.8 | 1.8 | 1.8 | 3.3 | 1.5 | 1.49 | 2.15 | 1.79 |
| Charpy impact strength ($kJ/m^2$) | | 15.3 | 15.6 | 15.4 | 17.6 | 15.4 | 13.5 | 17.6 | 12.5 |
| Vicat softening temperature (°C) | | 120.0 | 118.5 | 119.3 | 115.0 | 115.2 | 133 | 112 | 120.4 |
| Haze value (%) | | 2.4 | 2.5 | 2.5 | 1.5 | 0.8 | 1.9 | 1.3 | 2.3 |
| Appearance | | ○ | ○ | ○ | ○ | ⊙ | ⊙ | ⊙ | ○ |

INDUSTRIAL APPLICABILITY

From the methacrylic resin composition of the present invention, it is possible to produce a shaping raw material which is a molded body having an excellent Charpy impact strength and haze value (visible light transmittance), and an excellent appearance. Examples of the uses thereof include a material for a vehicle member such as a tail lamp cover, a head lamp cover, a visor, or a cover of a meter panel, an optical member such as a lens, a display protective plate, an optical film, or a light guide plate, or a member for a cosmetic container, and the methacrylic resin composition of the present invention has high availability.

DESCRIPTION OF REFERENCE SIGNS

| | |
|---|---|
| 1 | Raw material monomer tank |
| 3 | Polymerization initiator tank |
| 10 | First reaction tank |
| 11a, 11c | Feeding port |
| 11b | Extraction port |
| 13 | Jacket |
| 17 | Polymerization initiator tank |
| 19 | Pump |
| 20 | Second reaction tank |
| 21a, 21c | Feeding port |
| 21b | Extraction port |
| 23 | Jacket |
| 25 | Extraction line |
| 31 | Pre-heater |
| 33 | Devolatilization extruder |
| 35 | Discharge line |
| 36 | Gate |
| 37 | Mold |
| 40 | Molded body (test piece) |
| 40a | Gate-corresponding region |
| 50 | Incident opening |

**Claims**

**1.** A methacrylic resin composition comprising:

a methacrylic resin satisfying at least one requirement selected from the group consisting of the following requirements (1) and (2); and
a styrene-maleic anhydride copolymer having a structural unit derived from styrene and a structural unit derived from maleic anhydride,
Requirement (1): a ratio (Mw/Mn) of a mass average molecular weight of the methacrylic resin to a number average molecular weight of the methacrylic resin is 1.9 to 4.8, and
Requirement (2): a ratio of a peak area from a molecular weight of 300,000 to the end point to a peak area from the starting point to the end point in a differential molecular weight distribution curve of the methacrylic resin is 1% to 15%.

**2.** The methacrylic resin composition according to claim 1, wherein the methacrylic resin composition satisfies the following requirement (1'),
Requirement (1'): a ratio (Mw/Mn) of a mass average molecular weight of the methacrylic resin to a number average molecular weight of the methacrylic resin is 1.9 to 3.0.

**3.** The methacrylic resin composition according to claim 2, wherein the methacrylic resin composition satisfies the following requirement (1''),
Requirement (1"): a ratio (Mw/Mn) of a mass average molecular weight of the methacrylic resin to a number average molecular weight of the methacrylic resin is 2.1 to 2.9.

**4.** The methacrylic resin composition according to any one of claims 1 to 3, wherein the methacrylic resin composition satisfies the following requirement (2'),
Requirement (2'): a ratio of a peak area from a molecular weight of 300,000 to the end point to a peak area from the starting point to the end point in a differential molecular weight distribution curve of the methacrylic resin is 5% to 13%.

**5.** The methacrylic resin composition according to any one of claims 1 to 4, wherein the methacrylic resin composition satisfies the following requirement (3),
Requirement (3): a mass average molecular weight of the methacrylic resin is 80,000 or more.

**6.** The methacrylic resin composition according to claim 5, wherein the methacrylic resin composition satisfies the following requirement (3'),
Requirement (3'): a mass average molecular weight of the methacrylic resin is 80,000 to 180,000.

**7.** The methacrylic resin composition according to any one of claims 1 to 6, wherein the methacrylic resin has a structural unit derived from a methacrylic acid ester, and a content of the structural unit derived from the methacrylic acid ester included in the methacrylic resin is 95.0% by mass or more with respect to 100% by mass of a total content of all structural units included in the methacrylic resin.

**8.** The methacrylic resin composition according to claim 7, wherein the methacrylic acid ester is methyl methacrylate.

**9.** The methacrylic resin composition according to any one of claims 1 to 8, wherein the methacrylic resin has a structural unit derived from an acrylic acid ester.

**10.** The methacrylic resin composition according to claim 9, wherein the acrylic acid ester is methyl acrylate.

**11.** The methacrylic resin composition according to any one of claims 1 to 10, wherein a content of a structural unit derived from maleic anhydride contained in the styrene-maleic anhydride copolymer is 15% by mass to 35% by mass with respect to 100% by mass of a total content of all structural units contained in the styrene-maleic anhydride copolymer.

**12.** The methacrylic resin composition according to any one of claims 1 to 11, wherein a content of the methacrylic resin and a content of the styrene-maleic anhydride copolymer are 50% by mass to 90% by mass and 10% by mass to 50% by mass, respectively,
with respect to 100% by mass of a total content of the methacrylic resin and the styrene-maleic anhydride copolymer.

**13.** A molded body comprising the methacrylic resin composition according to any one of claims 1 to 12.

**14.** A molded body comprising at least one resin, wherein the molded body satisfies the following requirements (21) to (23):

Requirement (21): a water absorption rate measured in the following procedures 1) to 3) is 1.5% by mass to 2.5% by mass,
Procedure 1): the molded body is pre-dried,
Procedure 2): the obtained molded body is allowed to stand in warm water at 80°C for 100 hours, and
Procedure 3): the water absorption rate is calculated from the following equation:

Water absorption rate = ((mass of molded body after standing for 100 hours) - (mass of molded body before standing for 100 hours))/(mass of molded body before standing for 100 hours) $\times$ 100,

Requirement (22): a Charpy impact strength is 14 $kJ/m^2$ to 22 $kJ/m^2$, and
Requirement (23): a Vicat softening temperature is 113°C to 130°C.

FIG. 1

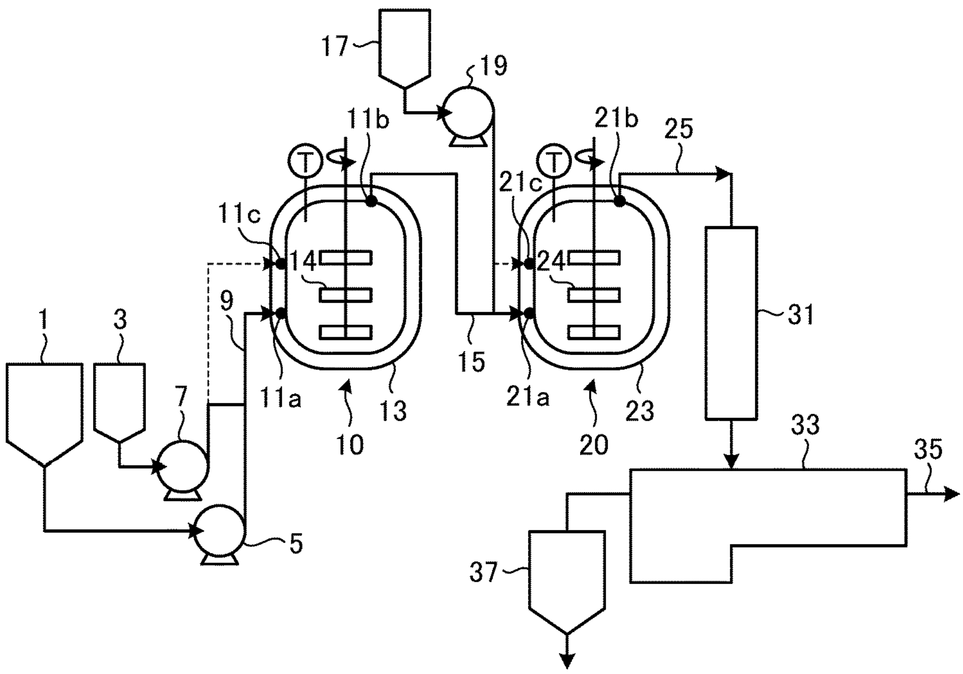
17
19
11b
21b
25
11c
21c
14
24
1
3
9
31
7
15
11a
13
21a
23
10
20
33
35
5
37

FIG. 2

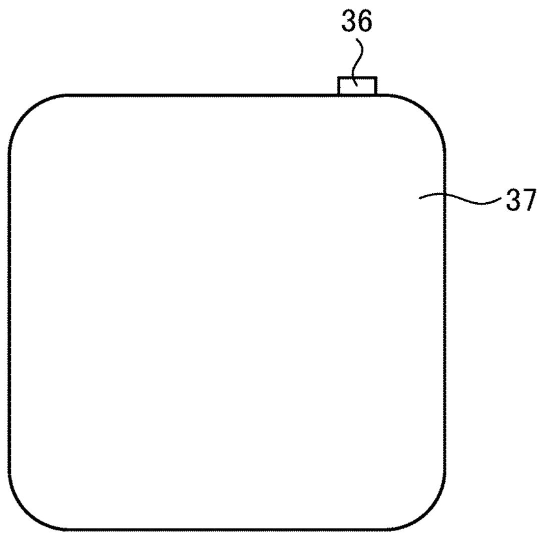
36
37

FIG.3

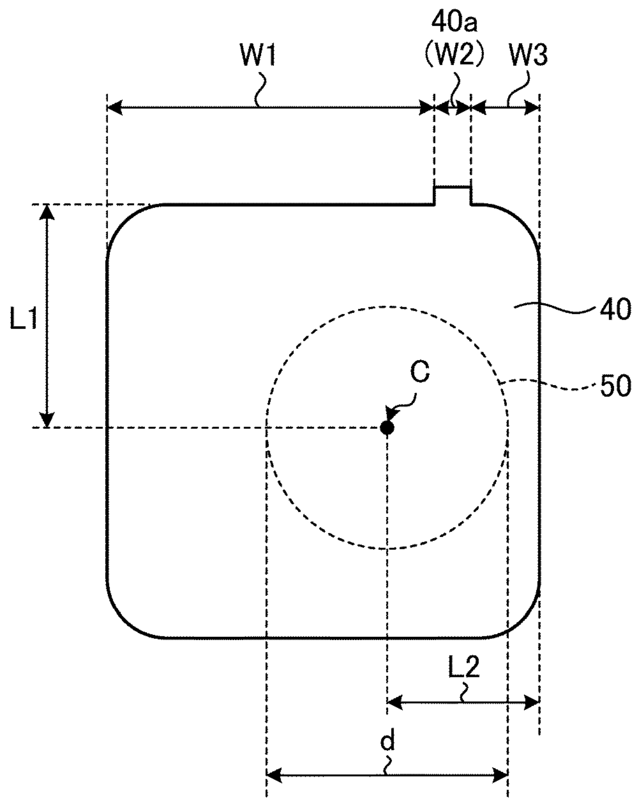


FIG. 4

| EXAMPLE 1. | EXAMPLE 5. | COMPARATIVE EXAMPLE 1. |
|---|---|---|
| 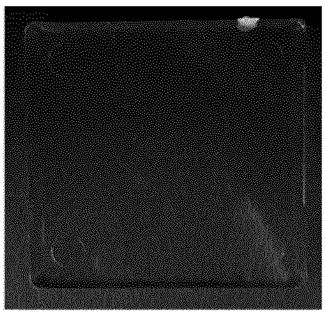 | 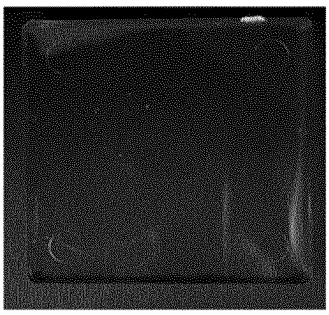 | 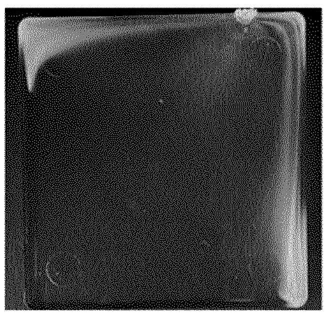 |

## INTERNATIONAL SEARCH REPORT

International application No. **PCT/JP2023/002018**

**A. CLASSIFICATION OF SUBJECT MATTER**

***C08L 33/12***(2006.01)i; ***C08L 25/08***(2006.01)i
FI: C08L33/12; C08L25/08

According to International Patent Classification (IPC) or to both national classification and IPC

**B. FIELDS SEARCHED**

Minimum documentation searched (classification system followed by classification symbols)

C08L33/12; C08L25/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/066393 A1 (SUMITOMO CHEMICAL COMPANY, LIMITED) 12 April 2018 (2018-04-12)<br>claims, paragraphs [0002], [0003], [0090], [0162], examples | 1-14 |
| Y | JP 2021-155698 A (SUMITOMO CHEMICAL COMPANY, LIMITED) 07 October 2021 (2021-10-07)<br>claims, paragraph [0045], examples | 1-14 |
| Y | JP 2014-108988 A (SUMITOMO CHEMICAL COMPANY, LIMITED) 12 June 2014 (2014-06-12)<br>claims, paragraph [0104], examples | 1-14 |
| Y | WO 2016/167292 A1 (KURARAY CO., LTD.) 20 October 2016 (2016-10-20)<br>claims, examples | 1-14 |
| Y | JP 2020-90667 A (CHI MEI CORPORATION) 11 June 2020 (2020-06-11)<br>claims, examples | 1-14 |
| A | WO 2015/182750 A1 (KURARAY CO., LTD.) 03 December 2015 (2015-12-03)<br>entire text | 1-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 March 2023** | **28 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/002018**

**C. DOCUMENTS CONSIDERED TO BE RELEVANT**

| Category* | Citation of document, with indication, where appropriate, of the relevant passages | Relevant to claim No. |
|---|---|---|
| A | JP 2008-225462 A (ASAHI KASEI CHEMICALS CORP) 25 September 2008 (2008-09-25) entire text | 1-14 |

Form PCT/ISA/210 (second sheet) (January 2015)

**INTERNATIONAL SEARCH REPORT**
**Information on patent family members**

International application No.
**PCT/JP2023/002018**

| Patent document cited in search report | Publication date (day/month/year) | Patent family member(s) | Publication date (day/month/year) |
|---|---|---|---|
| WO 2018/066393 A1 | 12 April 2018 | US 2020/0172646 A1<br>claims, paragraphs [0002], [0003], [0141], [0313], examples<br>EP 3524872 A1<br>CN 109790352 A<br>TW 201829487 A | |
| JP 2021-155698 A | 07 October 2021 | US 2021/0301120 A1<br>claims, paragraph [0049], examples<br>EP 3885371 A1<br>CN 113444332 A | |
| JP 2014-108988 A | 12 June 2014 | US 2016/0185884 A1<br>claims, paragraph [0167], examples<br>WO 2014/088082 A1<br>EP 2927249 A1<br>TW 201434861 A<br>KR 10-2015-0091070 A<br>CN 104955853 A<br>SG 11201504287W A | |
| WO 2016/167292 A1 | 20 October 2016 | EP 3284784 A1<br>claims, examples<br>CN 107531978 A<br>KR 10-2017-0138417 A<br>TW 201700588 A | |
| JP 2020-90667 A | 11 June 2020 | US 2020/0181388 A1<br>claims, examples<br>EP 3502180 A1<br>TW 202022036 A<br>CN 110016195 A | |
| WO 2015/182750 A1 | 03 December 2015 | CN 106414599 A<br>entire text<br>KR 10-2017-0013253 A<br>TW 201605955 A | |
| JP 2008-225462 A | 25 September 2008 | JP 2008-225463 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020090667 A
- WO 2014088082 A